# EUROPEAN PATENT APPLICATION

(11) **EP 4 770 009 A1**
(43) Date of publication of application: **01.07.2026**
(21) Application number: 24864505.3
(22) Date of filing: 03.09.2024
(51) Int. Cl.: H04L 9/40

(54) **DATA CIRCULATION METHOD, APPARATUS AND SYSTEM**

(30) Priority: 14.09.2023 CN 202311190481
(71) Applicant: Huawei Technologies Co., Ltd., Shenzhen, Guangdong 518129 (CN)
(72) Inventor: CHEN, Xiaohua, Shenzhen, Guangdong 518129 (CN); JIANG, Wu, Shenzhen, Guangdong 518129 (CN); YANG, Zao, Shenzhen, Guangdong 518129 (CN); YANG, Hui, Shenzhen, Guangdong 518129 (CN)
(74) Representative: Thun, Clemens
(86) International application number: PCT/CN2024/116660
(87) International publication number: WO 2025/055783

(57) **Abstract**

This application provides a data circulation method, apparatus, and system, and may be applied to the field of computer technologies. The data circulation method includes: A first storage device generates first data, obtains a first transfer strategy and a first use strategy of the first data, and sends the first data and the first use strategy to a second storage device when determining that the first data meets the first transfer strategy, where the first use strategy is a strategy indicating the second storage device to use the first data. In this application, the first data is sent only when it is determined that the first data meets the first transfer strategy, and the second storage device is indicated, by using the first use strategy, to use the first data. Therefore, behavior of a data user can be managed and controlled, to ensure security of the first data in a circulation process, and avoid problems such as data abuse and data leakage.

## Description

This application claims priority to Chinese Patent Application No. 202311190481.2, filed with the China National Intellectual Property Administration on September 14, 2023 and entitled "DATA CIRCULATION METHOD, APPARATUS, AND SYSTEM", which is incorporated herein by reference in its entirety.

### TECHNICAL FIELD

This application relates to the field of computer technologies, and in particular, to a data circulation method, apparatus, and system.

### BACKGROUND

The International Data Spaces Association (international data spaces association, IDSA) is the most influential international organization in the field of global data circulation, aiming to establish open, secure, and reliable data space. To resolve a security problem of data in circulation and effectively restrict use of data in circulation, the IDSA proposes a connector-based data circulation management and control system. The IDSA points out that after any data entity is connected to a connector, the data entity can access data of another data entity through communication between a plurality of connectors, in other words, a blueprint for secure data circulation is constructed, which aims to ensure data circulation and maintain data sovereignty of a data owner.

However, how to design a connector to ensure secure circulation of data between any two data entities and avoid problems such as data abuse and data leakage in a circulation process is an urgent problem to be resolved.

### SUMMARY

To resolve the foregoing technical problem, this application provides a data circulation method, apparatus, and system, to ensure secure circulation of data between any two data entities, and avoid problems such as data abuse and data leakage in a circulation process.

According to a first aspect, a data circulation method is provided, including: A first storage device obtains source data from a storage device, generates first data based on the source data, then obtains a first transfer strategy and a first use strategy of the first data, and sends the first data and the first use strategy to a second storage device when determining that the first data meets the first transfer strategy. After receiving the first data and the first use strategy of the first data that are sent by the first storage device, the second storage device sends the first data and the first use strategy to a second computing device when executing the first use strategy on the first data, to control use of the first data by an application on the second computing device. The first use strategy is a strategy indicating the second storage device to use the first data. The storage device belongs to a first user. The second storage device and the second computing device belong to a second connection system. The second storage device and the second computing device are configured to process the first data based on an indication of a requirement device of the first data, that is, the second connection system is configured to process the first data based on the indication of the requirement device of the first data. The requirement device of the first data belongs to a second user, and the storage device and the requirement device of the first data are different devices.

The foregoing solution has the following advantages.
1. A process in which the first data circulates from a data owner to a data user includes various data circulation stages such as creating the first data, determining the first use strategy, and transmitting the first data. The first storage device sends the first data only when determining that the first data meets the first transfer strategy, and indicates, by using the first use strategy, the second storage device to use the first data. Therefore, behavior of a data user can be managed and controlled, to ensure security of the first data in a circulation process, and avoid problems such as data abuse and data leakage.
2. Compared with a case in which the first data is directly sent to the requirement device of the first data, and consequently, the use process of the first data in the requirement device cannot be managed and controlled, in this technical solution, the second storage device that can execute the first use strategy processes the first data based on an indication of the requirement device of the first data, so that behavior, such as accessing, obtaining, and using the first data by the second computing device, is always performed under a constraint of the first use strategy. Therefore, security management and control can also be performed on use behavior of the data user, and security of the first data in the circulation process is ensured. Therefore, the foregoing solution is a feasible solution for implementing a connector-based data circulation management and control system proposed by the IDSA.
3. Secure transmission of the first data can be implemented based on two storage devices, so that when the application on the second computing device needs to use the first data, the first data in the second storage device in the same connection system can be directly accessed, and original behavior of using the first data by the application on the second computing device does not need to be changed. In this way, the data user can directly deploy the application, and does not need to greatly adjust the application for using the first data. Therefore, circulation performance of the first data in a plurality of applications is improved.

In some possible implementations, before the first storage device sends the first data and the first use strategy to the second storage device when determining that the first data meets the first transfer strategy, the method further includes: The first storage device receives a first use request used to request the first data, and sends the first data and the first use strategy to the second storage device when determining that the first use request and the first data meet the first transfer strategy.

In the foregoing solution, the first transfer strategy is used to verify appropriateness of the first use request of the data user, and the first transfer strategy is used to check compliance of the first data, so that a transfer process of the first data can be controlled, to ensure security of the first data in the transfer process.

In some possible implementations, the method further includes: The first storage device receives second data and a second use strategy of the second data that are sent by a third storage device, and sends the second data and the second use strategy to a first computing device when executing the second use strategy on the second data, to control use of the second data by an application on the first computing device.

In the foregoing solution, the first storage device further supports controlling, when executing the second use strategy, access, obtaining, use, and the like of the second data by the first computing device, so that behavior of the data user can also be securely managed and controlled, and security of the second data in a transfer process is ensured.

In some possible implementations, the first transfer strategy includes one or more of a user and access content of the first data, and the first transfer strategy is generated based on a transfer requirement or asset information of the first data. The transfer requirement is determined by the first storage device and the second storage device through negotiation, the asset information is generated by the first storage device, and the asset information includes one or more of a type, a size, a format, a purpose, and available time of the first data.

In some possible implementations, the first use strategy includes one or more of use time, a use range, and a use manner of the first data.

According to a second aspect, a data circulation method is provided, including: A first computing device obtains source data from a storage device, generates first data based on the source data, then obtains a first transfer strategy and a first use strategy of the first data, and sends the first data and the first use strategy to a second computing device when determining that the first data meets the first transfer strategy. After receiving the first data and the first use strategy that are sent by the first computing device, the second computing device uses the first data when executing the first use strategy. The first use strategy is a strategy indicating the second computing device to use the first data. The first computing device is configured to process the first data based on an indication of the storage device. The storage device belongs to a first user. The second computing device is configured to process the first data based on an indication of a requirement device of the first data. The requirement device of the first data belongs to a second user, and the storage device and the requirement device of the first data are different devices.

The foregoing solution has the following advantages.
1. A process in which the first data circulates from a data owner to a data user includes various data circulation stages such as creating the first data, transmitting the first data, and using the first data. The first computing device sends the first data only when determining that the first data meets the first transfer strategy, and the second computing device can use the first data only when executing the first use strategy. Therefore, behavior of the data user can be managed and controlled, to ensure security of the first data in a circulation process, and avoid problems such as data abuse and data leakage.
2. Compared with a case in which the first data is directly sent to the requirement device of the first data, and consequently, the use process of the first data in the requirement device cannot be managed and controlled, in this technical solution, the second computing device that can execute the first use strategy processes the first data based on an indication of the requirement device of the first data, so that behavior, such as accessing, obtaining, and using the first data, is always performed under a constraint of the first use strategy. Therefore, security management and control can also be performed on use behavior of the data user, and security of the first data in the circulation process is ensured. Therefore, the foregoing solution is a feasible solution for implementing a connector-based data circulation management and control system proposed by the IDSA.

In some possible implementations, before the first computing device sends the first data and the first use strategy to the second computing device when determining that the first data meets the first transfer strategy, the method further includes: The first computing device receives a first use request that is sent by the second computing device and that is used to request the first data, and sends the first data and the first use strategy to the second computing device when determining that the first use request and the first data meet the first transfer strategy.

In the foregoing solution, the first transfer strategy is used to verify appropriateness of the first use request of the data user, and the first transfer strategy is used to check compliance of the first data, so that a transfer process of the first data can be controlled, to ensure security of the first data in the transfer process.

In some possible implementations, the method further includes: The first computing device receives a first use record of the first data from the second computing device, and determines, based on the first use record, whether use of the first data by the second computing device meets the first use strategy, where the first use record is a record of using the first data by the second computing device.

In the foregoing solution, behavior of using the first data is monitored by using the first use record, so that behavior of the data user can be managed and controlled, to ensure security of the first data in a circulation process.

In some possible implementations, the second computing device executes the first use strategy on the first data, generates the first use record, and uploads the first use record to the first computing device in a second secure computing environment, to control use of the first data by an application on the second computing device. The first use record is a record of using the first data by the second computing device. The second secure computing environment is a secure isolation environment, is used to protect security of the second computing device, security in executing the first use strategy, and security in using the first data, and is implemented by disabling a data input interface and a data output interface of the application when the application on the second computing device uses the first data, or implemented by deploying a trusted execution environment in the second computing device, or implemented by deploying a virtual machine or a container in the second computing device.

In the foregoing solution, the second computing device executes the first use strategy on the first data in the second secure computing environment, which can ensure that the first data is always used in the second secure computing environment, avoid leakage of the first data, and further ensure that the execution process of the first use strategy is not interfered. In addition, the first use record is generated in the second secure computing environment, so that it can be ensured that the first use record cannot be tampered with, and security and trustworthiness of the first use record are ensured.

In some possible implementations, the method further includes: The first computing device receives second data and a second use strategy of the second data that are sent by a third computing device, and executes the second use strategy on the second data to control use of the second data by an application on the first computing device. The first computing device is configured to process the second data based on an indication of a requirement device of the second data, and the requirement device of the second data and the storage device are different devices, or the requirement device of the second data and the storage device are a same device.

In the foregoing solution, the first computing device further supports executing the second use strategy on the second data to control use of the second data by the application on the first computing device, so that behavior of the data user can be securely managed and controlled, and security of the second data in the circulation process can be ensured.

In some possible implementations, the first computing device executes the second use strategy on the second data, generates a second use record, and uploads the second use record to the third computing device in a first secure computing environment, to control use of the second data by the application on the first computing device. The second use record is a record of using the second data by the first computing device. The first secure computing environment is a secure isolation environment, is used to protect security of the first computing device, security in executing the second use strategy, and security in using the second data, and is implemented by disabling a data input interface and a data output interface of the application when the application on the first computing device uses the second data, or implemented by deploying a trusted execution environment in the first computing device, or implemented by deploying a virtual machine or a container in the first computing device.

In the foregoing solution, the first computing device executes the second use strategy on the second data in the first secure computing environment, which can ensure that the second data is always used in the first secure computing environment, avoid leakage of the second data, and further ensure that the execution process of the second use strategy is not interfered. In addition, the second use record is generated in the first secure computing environment, so that it can be ensured that the second use record cannot be tampered with, and security and trustworthiness of the second use record are ensured.

In some possible implementations, the first transfer strategy includes one or more of a user and access content of the first data, and the first transfer strategy is generated based on a transfer requirement or asset information of the first data. The transfer requirement is determined by the first storage device and the second storage device through negotiation, the asset information is generated by the first storage device, and the asset information includes one or more of a type, a size, a format, a purpose, and available time of the first data.

In some possible implementations, the first use strategy includes one or more of use time, a use range, and a use manner of the first data.

According to a third aspect, a data circulation apparatus is provided, is used as a first storage apparatus, and includes a first management module, a first control module, and a first interconnection module. The first management module is configured to: obtain source data from a storage apparatus, and generate first data based on the source data. The first control module is configured to obtain a first transfer strategy and a first use strategy of the first data. The first interconnection module is configured to send the first data and the first use strategy to a second storage apparatus when determining that the first data meets the first transfer strategy. The first use strategy is a strategy indicating the second storage apparatus to use the first data. The storage apparatus belongs to a first user. The second storage apparatus is configured to process the first data based on an indication of a requirement apparatus of the first data. The requirement apparatus of the first data belongs to a second user, and the storage apparatus and the requirement apparatus of the first data are different apparatuses.

In some possible implementations, the first interconnection module is specifically configured to: receive a first use request used to request the first data, and send the first data and the first use strategy to the second storage apparatus when determining that the first use request and the first data meet the first transfer strategy.

In some possible implementations, the first interconnection module is further configured to receive second data and a second use strategy of the second data that are sent by a third storage apparatus.

The first control module is further configured to send the second data and the second use strategy to a first computing apparatus when executing the second use strategy on the second data, to control use of the second data by the first computing apparatus.

In some possible implementations, the first transfer strategy includes one or more of a user and access content of the first data, and the first transfer strategy is generated based on a transfer requirement or asset information of the first data. The transfer requirement is determined by the first storage apparatus and the second storage apparatus through negotiation, the asset information is generated by the first management module, and the asset information includes one or more of a type, a size, a format, a purpose, and available time of the first data.

In some possible implementations, the first use strategy includes one or more of use time, a use range, and a use manner of the first data.

According to a fourth aspect, a data circulation apparatus is provided, is used as a first computing apparatus, and includes a second management module, a second control module, and a second interconnection module. The second management module is configured to: obtain source data from a storage apparatus, and generate first data based on the source data. The second control module is configured to obtain a first transfer strategy and a first use strategy of the first data. The second interconnection module is configured to send the first data and the first use strategy to a second computing apparatus when determining that the first data meets the first transfer strategy. The first use strategy is a strategy indicating the second computing apparatus to use the first data. The first computing apparatus is configured to process the first data based on an indication of a storage apparatus. The storage apparatus belongs to a first user. The second computing apparatus is configured to process the first data based on an indication of a requirement apparatus of the first data. The requirement apparatus of the first data belongs to a second user, and the storage apparatus and the requirement apparatus of the first data are different apparatuses.

In some possible implementations, the second interconnection module is specifically configured to: receive a first use request that is sent by the second computing apparatus and that is used to request the first data, and send the first data and the first use strategy to the second computing apparatus when determining that the first use request and the first data meet the first transfer strategy.

In some possible implementations, the first computing apparatus is further configured to: receive the first use record of the first data from the second computing apparatus, and determine, based on the first use record, whether use of the first data by the second computing apparatus meets the first use strategy, where the first use record is a record of using the first data by the second computing apparatus.

In some possible implementations, the second interconnection module is further configured to: receive second data and a second use strategy of the second data that are sent by a third computing apparatus, and execute the second use strategy on the second data to control use of the second data by the first computing apparatus. The first computing apparatus is configured to process the second data based on an indication of a requirement apparatus of the second data, and the requirement apparatus of the second data and the storage apparatus are different apparatuses, or the requirement apparatus of the second data and the storage apparatus are a same apparatus.

In some possible implementations, the first computing apparatus has a first secure computing environment. In this case, the second control module is specifically configured to: execute the second use strategy on the second data, generate the second use record, and upload the second use record to a third computing apparatus in a first secure computing environment, to control use of the second data by the first computing apparatus. The second use record is a record of using the second data by the first computing apparatus. The first secure computing environment is a secure isolation environment, is used to protect security of the first computing apparatus, security in executing the second use strategy, and security in using the second data, and is implemented by disabling a data input interface and a data output interface when the first computing apparatus uses the second data, or implemented by deploying a trusted execution environment in the first computing apparatus, or implemented by deploying a virtual machine or a container in the first computing apparatus.

In some possible implementations, the first transfer strategy includes one or more of a user and access content of the first data, and the first transfer strategy is generated based on a transfer requirement or asset information of the first data. The transfer requirement is determined by the first computing apparatus and the second computing apparatus through negotiation, the asset information is generated by the first computing apparatus, and the asset information includes one or more of a type, a size, a format, a purpose, and available time of the first data.

In some possible implementations, the first use strategy includes one or more of use time, a use range, and a use manner of the first data.

According to a fifth aspect, a data circulation apparatus is provided, is used as a second storage apparatus, and includes a third interconnection module and a third control module. The third interconnection module is configured to receive first data and a first use strategy of the first data that are sent by a first storage apparatus. The third control module is configured to send the first data and the first use strategy to a second computing apparatus when executing the first use strategy on the first data, to control use of the first data by the second computing apparatus. The second storage apparatus and the second computing apparatus belong to a second connection system, and the second connection system is configured to process the first data based on an indication of a requirement apparatus of the first data.

In some possible implementations, the first use strategy includes one or more of use time, a use range, and a use manner of the first data.

According to a sixth aspect, a data circulation apparatus is provided, is used as a second computing apparatus, and includes a fourth interconnection module and a fourth control module. The fourth interconnection module is configured to receive first data and a first use strategy of the first data that are sent by a first computing apparatus. The fourth control module is configured to use the first data when executing the first use strategy. The second computing apparatus is configured to process the first data based on an indication of a requirement apparatus of the first data. The first computing apparatus is configured to process the first data based on an indication of a storage apparatus. The first data is generated based on source data in the storage apparatus. The storage apparatus belongs to a first user, the requirement apparatus belongs to a second user, and the storage apparatus and the requirement apparatus are different apparatuses.

In some possible implementations, the second computing apparatus has a second secure computing environment. In this case, the fourth control module is specifically configured to: execute the first use strategy on the first data, generate a first use record, and upload the first use record to the first computing apparatus in the second secure computing environment, to control use of the first data by an application on the second computing apparatus. The first use record is a record of using the first data by the second computing apparatus. The second secure computing environment is a secure isolation environment, is used to protect security of the second computing apparatus, security in executing the first use strategy, and security in using the first data, and is implemented by disabling a data input interface and a data output interface when the second computing apparatus uses the first data, or implemented by deploying a trusted execution environment in the second computing apparatus, or implemented by deploying a virtual machine or a container in the second computing apparatus.

In some possible implementations, the first use strategy includes one or more of use time, a use range, and a use manner of the first data.

According to a seventh aspect, a data circulation system is provided, including the first storage apparatus according to any implementation of the third aspect, and/or the second storage apparatus according to any implementation of the fifth aspect.

According to an eighth aspect, a data circulation system is provided, including the first computing apparatus according to any implementation of the fourth aspect, and/or the second computing apparatus according to any implementation of the sixth aspect.

According to a ninth aspect, a computing device cluster is provided, including at least one computing device. Each computing device includes a processor and a memory.

The processor of the at least one computing device is configured to execute instructions stored in the memory of the at least one computing device, so that the computing device cluster performs the method according to any implementation of the second aspect.

According to a tenth aspect, a storage device cluster is provided, including at least one storage device. Each storage device includes a processor and a memory.

The processor of the at least one storage device is configured to execute instructions stored in the memory of the at least one storage device, so that the storage device cluster performs the method according to any implementation of the first aspect.

According to an eleventh aspect, a computer program product including instructions is provided. When the instructions are run by a computing device cluster, the computing device cluster is enabled to perform the method according to any implementation of the first aspect or the second aspect.

According to a twelfth aspect, a computer-readable storage medium is provided, including computer program instructions. When the computer program instructions are executed by a computing device cluster, the computing device cluster performs the method according to any implementation of the first aspect or the second aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a data circulation scenario according to this application;
FIG. 2 is a diagram of a structure of a connection system according to this application;
FIG. 3 is a diagram of a structure of a storage device according to this application;
FIG. 4 is a diagram of a structure of a computing device according to this application;
FIG. 5 is a diagram of a structure of a database system according to this application;
FIG. 6A and FIG. 6B are a schematic flowchart of a data circulation method according to this application;
FIG. 7A and FIG. 7B are a schematic flowchart of another data circulation method according to this application;
FIG. 8 is a diagram of a structure of a data circulation system according to this application;
FIG. 9 is a diagram of a structure of another data circulation system according to this application;
FIG. 10 is a diagram of a structure of a computing device cluster according to this application;
FIG. 11 is a diagram of a structure of another computing device cluster according to this application;
FIG. 12 is a diagram of a structure of a storage device cluster according to this application; and
FIG. 13 is a diagram of a structure of another storage device cluster according to this application.

### DESCRIPTION OF EMBODIMENTS

The following describes embodiments of this application with reference to the accompanying drawings in embodiments of this application.

To facilitate understanding of embodiments of this application, an application scenario in this application is first described.

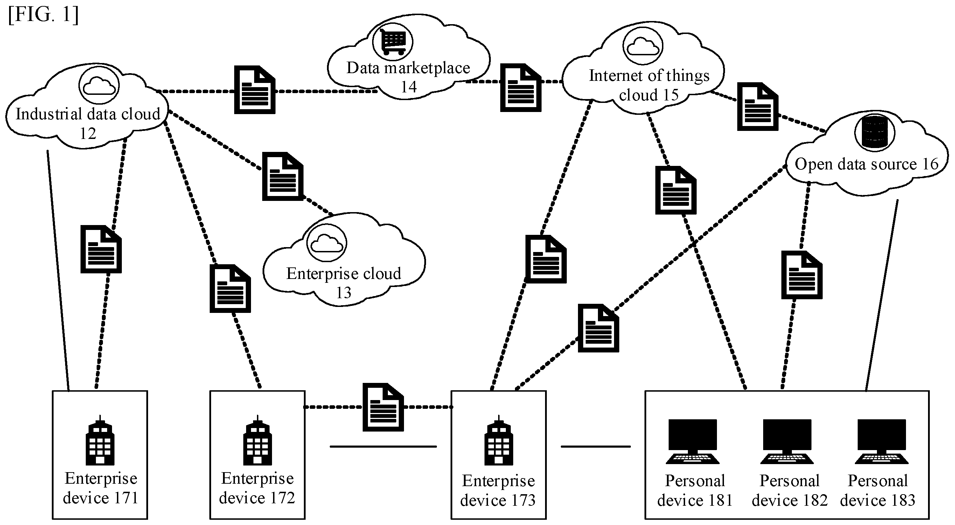

FIG. 1 is a diagram of a data circulation scenario according to this application. As shown in FIG. 1, the data circulation scenario in this application includes a plurality of data entities, for example, an industrial data cloud 12 (industrial data cloud), an enterprise cloud 13 (enterprise cloud), a data marketplace 14 (data marketplace), an internet of things cloud 15 (internet of things cloud), an open data source 16 (open data source), enterprise devices (an enterprise device 171, an enterprise device 172, an enterprise device 173, ...), and personal devices (a personal device 181, a personal device 182, a personal device 183, ...).

Data needs to be circulated between these data entities, to implement value of the data. However, the IDSA proposes that, data sovereignty of a data owner needs to be maintained while data circulation is ensured. Therefore, a connection system needs to be disposed between data entities, so that after any data entity is connected to one connection system, the data entity accesses data of another data entity through communication between a plurality of connection systems. However, how to design a connection system to ensure secure circulation of data between any two data entities and avoid problems such as data abuse and data leakage in a circulation process is an urgent problem to be resolved.

To resolve the foregoing problems, this application provides a data circulation method, apparatus, and system, to implement circulation of the data between the foregoing plurality of data entities.

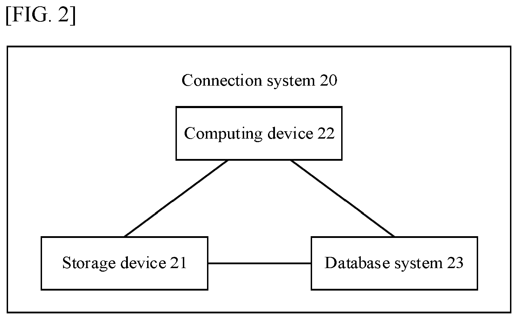

FIG. 2 is a diagram of a structure of a connection system according to this application. A connection system 20 provided in this application includes one or more storage devices 21, one or more computing devices 22, and one or more database systems 23.

In some possible implementations, the storage device 21 is configured to store unstructured data and semi-structured data, including running data of the computing device 22. The storage device 21 may be a server, a network storage (network attached storage, NAS), a cloud storage gateway (cloud storage gateway, CSG), or the like. The unstructured data includes a document, a text, a picture, a report, an image, an audio, a video, and the like. The semi-structured data includes a log file, an XML document, a JSON document, an email, an HTML document, and the like.

In some possible implementations, the computing device 22 is configured to provide a computing service or an application service. One or more applications, such as application software, an algorithm, or a functional function, may be deployed on the computing device 22. The computing device 22 may be a super computer, a network computer (for example, a server, a workstation, a hub, a switch, or a router), an industrial control computer (for example, a PC bus industrial computer, a programmable logic control system, a decentralized control system, a field bus system, or a numerical control system), a personal computer (for example, a desktop computer, an all-in-one computer, a notebook computer, a palmtop computer, or a tablet computer), an embedded processor (for example, an embedded microcontroller, an embedded microprocessor, an embedded digital signal processor, or an embedded system on a chip), or the like.

In some possible implementations, the database system 23 is configured to store structured data. The database system 23 may include one or more memories. Alternatively, the database system 23 may include one or more calculators. The structured data includes a table.

In some possible implementations, in the connection system 20, based on a data request generated by an application, the computing device 22 may access the unstructured data and the semi-structured data in the storage device 21, and may also access the structured data in the database system 23. In addition, the computing device 22 may process the unstructured data or the semi-structured data obtained from the storage device 21, to obtain structured data, and then store the structured data in the database system 23. Alternatively, the computing device 22 may process the structured data obtained from the database system 23, to obtain unstructured data or semi-structured data, and then store the unstructured data or the semi-structured data in the storage device 21.

In a specific implementation, when the storage device 21 is configured to store a ciphertext of the unstructured data and a ciphertext of the semi-structured data, and the database system 23 is configured to store a ciphertext of the structured data, after obtaining the ciphertext of the unstructured data or the ciphertext of the semi-structured data from the storage device 21, the computing device 22 decrypts the ciphertext of the unstructured data or the ciphertext of the semi-structured data by using a decryption algorithm, then processes the unstructured data or the semi-structured data obtained through decryption, to obtain structured data, then encrypts the structured data by using an encryption algorithm, to obtain a ciphertext of the structured data, and stores the ciphertext of the structured data in the database system 23. Alternatively, after obtaining the ciphertext of the structured data from the database system 23, the computing device 22 decrypts the ciphertext of the structured data by using a decryption algorithm, processes the structured data obtained through decryption, to obtain unstructured data or semi-structured data, encrypts the unstructured data or the semi-structured data by using an encryption algorithm, to obtain a ciphertext of the unstructured data or a ciphertext of the semi-structured data, and stores the ciphertext of the unstructured data or the ciphertext of the semi-structured data in the storage device 21. The ciphertext is a character string obtained by encrypting data by using the encryption algorithm.

It should be understood that sources of the ciphertext of the unstructured data, the ciphertext of the semi-structured data, and the ciphertext of the structured data are merely used as examples. The ciphertext of the unstructured data and the ciphertext of the semi-structured data may alternatively be obtained by the storage device 21 after encrypting the unstructured data and the semi-structured data by using the encryption algorithm, and the ciphertext of the structured data may alternatively be obtained after the database system 23 encrypts the structured data by using the encryption algorithm. Alternatively, the ciphertext of the unstructured data, the ciphertext of the semi-structured data, and the ciphertext of the structured data may all be obtained after the computing device 22 encrypts the unstructured data, the semi-structured data, and the structured data by using the encryption algorithm. This is not specifically limited herein.

In some possible implementations, the storage device 21 and the database system 23 may be further configured to store anonymous data. The anonymous data in the storage device 21 is obtained by performing an anonymization operation on the unstructured data or the semi-structured data. The anonymous data in the database system 23 is obtained by performing an anonymization operation on the structured data.

In some possible implementations, because different applications in the computing device 22 have different requirements on a data type, the database system 23 may directly obtain the unstructured data or the semi-structured data from the storage device 21, process the unstructured data or the semi-structured data to obtain structured data, and then provide the structured data for an application on the computing device 22.

In some possible implementations, the storage device 21, the computing device 22, and the database system 23 may be a same device. Therefore, the connection system 20 may be a device. A server is used as an example. The storage device 21 may be a server A, the computing device 22 may also be the server A, and the database system 23 may also be the server A. That is, the server A is used as the connection system 20 to implement functions of the storage device 21, the computing device 22, and the database system 23.

In some possible implementations, the connection system 20 is connected to a data entity, so that the connection system 20 can process data on behalf of a data storage device or a data requirement device. The data storage device or the data requirement device may be a storage device, a computing device, or a database system. The connection system 20 is connected to the data entity in the following at least three implementations.

In a specific implementation, the data entity is deployed on the computing device 22 of the connection system 20, so that the connection system 20 is connected to the data entity, and the connection system 20 can process data on behalf of the data storage device or the data requirement device. For example, the industrial data cloud 12, the enterprise cloud 13, the data marketplace 14, the internet of things cloud 15, or the open data source 16 is deployed on the computing device 22, so that the computing device 22 of the connection system 20 stores data or description information of the data, and the storage device 21 of the connection system 20 may also directly obtain the data or the description information of the data from the computing device 22. The data may be unstructured data, semi-structured data, or structured data. The description information of the data may include a type, a size, a format, and the like of the data.

In another specific implementation, the data entity is used as a data storage device outside the connection system 20. In this case, the data storage device imports data to the storage device 21 of the connection system 20, or the computing device 22 of the connection system 20 accesses data in the data storage device, and stores the obtained data in the storage device 21, so that the data entity is connected to the connection system 20. In this way, the connection system 20 can process data on behalf of the data storage device. For example, the enterprise device 171, the enterprise device 172, or the enterprise device 173 is used as a data storage device outside the connection system 20. The computing device 22 may access data in the enterprise device 171, the enterprise device 172, or the enterprise device 173, and store the data obtained from the enterprise device 171, the enterprise device 172, or the enterprise device 173 in the storage device 21, so that the connection system 20 can process data on behalf of the enterprise device 171, the enterprise device 172, or the enterprise device 173.

In another specific implementation, the data entity is used as a data requirement device outside the connection system 20. In this case, a data user deploys, on the computing device 22 of the connection system 20, an application that can use data on the data requirement device, and the application on the computing device 22 uses the data, that is, it is always ensured that data is provided only for the application on the computing device 22, and data is not provided for an application outside the connection system 20. If new data (such as an intermediate result or a computing result) is generated in a process of using the data by the application, the computing device 22 imports the new data to the data requirement device. In conclusion, the data entity can be connected to the connection system 20, so that the connection system 20 can process data on behalf of the data requirement device. For example, the personal device 181, the personal device 182, or the personal device 183 is used as a data requirement device outside the connection system 20. An application on the personal device 181, the personal device 182, or the personal device 183 may be deployed on the computing device 22, and the application on the computing device 22 uses data, and then new data such as an intermediate result and a computing result generated by the application is imported to the personal device 181, the personal device 182, or the personal device 183, so that the connection system 20 can complete data processing on behalf of the personal device 181, the personal device 182, or the personal device 183.

The following specifically describes specific structures of the storage device 21, the computing device 22, and the database system 23.

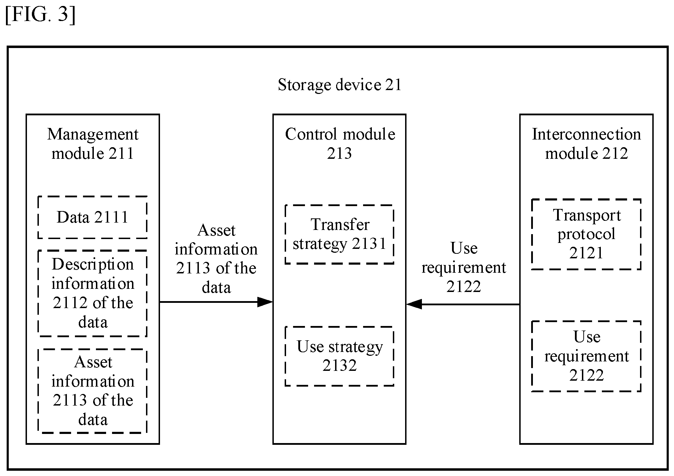

FIG. 3 is a diagram of a structure of the storage device according to this application. As shown in FIG. 3, the storage device 21 includes a management module 211, an interconnection module 212, and a control module 213.

In some possible implementations, the management module 211 is configured to store and manage data 2111, description information 2112 of the data, and asset information 2113 of the data. The data 2111 includes unstructured data and semi-structured data, and running data of the computing device 22. The description information 2112 of the data includes a type, a size, a format, and the like of the data 2111. The asset information 2113 of the data includes a type, a size, a format, a purpose, available time, and the like of the data 2111.

In some possible implementations, the interconnection module 212 is configured to: manage all data input into the connection system 20 and all data output from the connection system 20, and perform data transmission with an interconnection module of a storage device in another connection system 20. To implement the foregoing data transmission, the interconnection module 212 needs to maintain a transport protocol 2121 and a use requirement 2122. The transport protocol 2121 may be a secure socket layer (secure socket layer, SSL) protocol, a transport layer security (transport layer security, TLS) protocol, or the like. The use requirement 2122 includes use time, a use range, a use manner, and the like of the data 2111.

In some possible implementations, the control module 213 is configured to: obtain a transfer strategy 2131 based on the asset information 2113 of the data in the management module 211, and obtain a use strategy 2132 based on the use requirement 2122 in the interconnection module 212. The transfer strategy 2131 is used to restrict a transfer process of the data 2111. The use strategy 2132 is used to control a use process of the data 2111.

In some possible implementations, the control module 213 obtains the transfer strategy 2131 in the following at least two implementations.

In a specific implementation, the control module 213 obtains a strategy resource from a strategy management module, and then sets, based on the asset information 2113 of the data, the transfer strategy 2131 by using the strategy resource. The strategy management module is configured to: store and manage the strategy resource. The strategy management module may be deployed on the storage device 21, or may be independently deployed on an independent storage device or computing device. Specifically, after receiving the asset information 2113 of the data sent by the management module 211, the control module 213 generates a first strategy resource request, and sends the first strategy resource request to the strategy management module, so that the control module 213 can access the strategy resource in the strategy management module. Subsequently, the control module 213 sets, based on the asset information 2113 of the data, specific content of the transfer strategy 2131 by using the strategy resource.

In another specific implementation, the control module 213 sends the asset information 2113 of the data to a strategy management module, and obtains the transfer strategy 2131 from the strategy management module. Specifically, the control module 213 sends the asset information 2113 of the data obtained from the management module 211 to the strategy management module. The strategy management module sets, based on the asset information 2113 of the data, specific content of the transfer strategy 2131 by using a strategy resource, and then sends, to the control module 213, the transfer strategy 2131 obtained after setting.

The specific content of the transfer strategy 2131 is determined by a data owner, and may include access content, an available time period, a user, and the like. For example, when created data includes two types: confidential data and non-confidential data, the confidential data needs to be prohibited from being transferred to the outside, that is, the confidential data is allowed to be stored only in a first data entity or a first connection subsystem, and is provided only for a data owner for use. Therefore, it may be specified in the transfer strategy that access content is the non-confidential data, that is, the confidential data is set to be not allowed to be accessed externally. Alternatively, for data that is opened at scheduled time, an available time period of the data may be set in a transfer strategy of the data, to prevent transferring of the data to the outside in an unavailable time period. Alternatively, if data is provided only for a specific object for use, a user of the data needs to be set in a transfer strategy of the data, to prevent transferring of the data to an object that does not meet a requirement.

It should be understood that the specific content of the transfer strategy 2131 is merely used as an example, and is not specifically limited herein.

In some possible implementations, corresponding to the manners in which the control module 213 obtains the transfer strategy 2131, the control module 213 may also obtain the use strategy 2132 in the following at least two implementations.

In a specific implementation, the control module 213 obtains the strategy resource from the strategy management module, and then sets, based on a use requirement 2122, the use strategy 2132 by using the strategy resource. Specifically, after receiving the use requirement 2122 sent by the interconnection module 212, the control module 213 generates a second strategy resource request, and sends the second strategy resource request to the strategy management module, so that the control module 213 can access the strategy resource in the strategy management module. Subsequently, the control module 213 sets, based on the use requirement 2122, specific content of the use strategy 2132 by using the strategy resource.

In another specific implementation, the control module 213 sends a use requirement 2122 to the strategy management module, and obtains a use strategy 2132 from the strategy management module. Specifically, the control module 213 sends the use requirement 2122 to the strategy management module. The strategy management module sets, based on the use requirement 2122, specific content of the use strategy 2132 by using the strategy resource, and then sends, to the control module 213, the use strategy 2132 obtained after setting.

The specific content of the use strategy 2132 is determined by a data owner, and may include use time, a use range, a use manner, collection of a use record, and the like. For example, (1) the use time includes access time and an available time period (for example, scheduled opening and deletion upon expiration). (2) The use range includes an IP address of a used device. (3) The use manner includes an access manner (for example, burning after reading), a quantity of use times, and forwarding permission (for example, forwarding to the outside of the connection system is not allowed, and decryption cannot be performed after forwarding to the outside of the connection system). (4) Collection of the use record includes a collection manner (for example, real-time collection and scheduled collection), access permission (for example, modification is not allowed), where the use records include a use behavior log, a data management log, and the like.

It should be understood that the specific content of the use strategy 2132 is merely used as an example, and is not specifically limited herein.

In some possible implementations, the management module 211, the interconnection module 212, and the control module 213 may be implemented by using software in the storage device 21, or may be implemented by using hardware in the storage device 21.

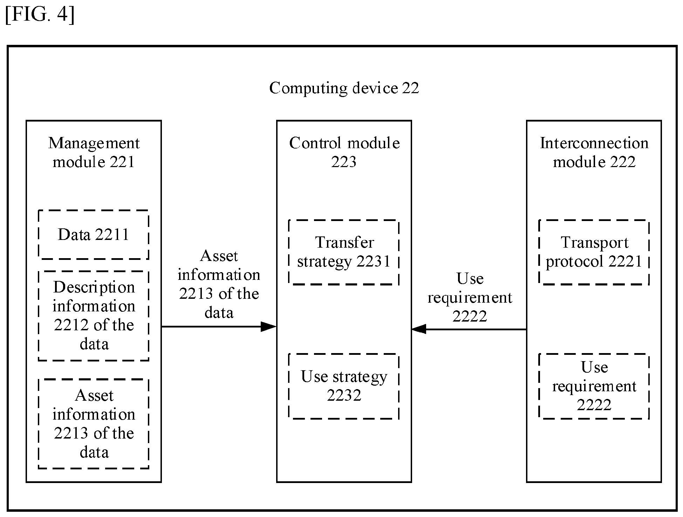

FIG. 4 is a diagram of a structure of the computing device according to this application. As shown in FIG. 4, the computing device 22 includes a management module 221, an interconnection module 222, and a control module 223.

In some possible implementations, the management module 221 is configured to store and manage data 2211, description information 2212 of the data, and asset information 2213 of the data. The data 2211 may include unstructured data, semi-structured data, and structured data, and the description information 2212 of the data may include a type, a size, a format, and the like of the data 2211. The asset information 2213 of the data may include a type, a size, a format, a purpose, available time, and the like of the data 2211.

In some possible implementations, the interconnection module 222 is configured to: manage all data input into the connection system 20 and all data output from the connection system 20, and perform data transmission with an interconnection module of a computing device in another connection system 20. To implement the foregoing data transmission, the interconnection module 222 needs to maintain a transport protocol 2221 and a use requirement 2222. The transport protocol 2221 may be an SSL protocol, a TLS protocol, or the like. The use requirement 2222 includes use time, a use range, a use manner, and the like of the data 2211.

In some possible implementations, the control module 223 is configured to: obtain a transfer strategy 2231 based on the asset information 2213 of the data in the management module 221, and obtain a use strategy 2232 based on the use requirement 2222 in the interconnection module 222. The transfer strategy 2231 is used to restrict a transfer process of the data 2211. The use strategy 2232 is used to control a use process of the data 2211. For an implementation in which the control module 223 obtains the transfer strategy 2231, refer to the implementation in which the control module 213 obtains the transfer strategy 2131 in FIG. 3. For an implementation in which the control module 223 obtains the use strategy 2232, refer to the implementation in which the control module 213 obtains the use strategy 2132 in FIG. 3.

In some possible implementations, the management module 221, the interconnection module 222, and the control module 223 may be implemented by using software in the computing device 22, or may be implemented by using hardware in the computing device 22.

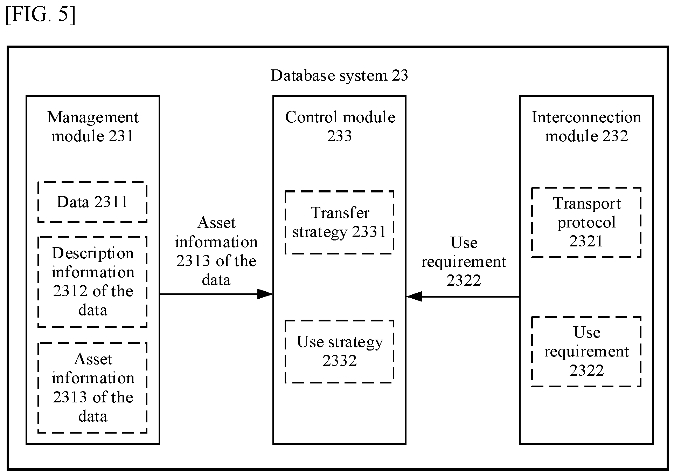

FIG. 5 is a diagram of a structure of the database system according to this application. As shown in FIG. 5, the database system 23 includes a management module 231, an interconnection module 232, and a control module 233.

In some possible implementations, the management module 231 is configured to store and manage data 2311, description information 2312 of the data, and asset information 2313 of the data. The data 2311 may include structured data, and the description information 2312 of the data may include a type, a size, a format, and the like of the data 2311. The asset information 2313 of the data may include a type, a size, a format, a purpose, available time, and the like of the data 2311.

In some possible implementations, the interconnection module 232 is configured to: manage all data input into the connection system 20 and all data output from the connection system 20, and perform data transmission with an interconnection module of a database system in another connection system 20. To implement the foregoing data transmission, the interconnection module 232 needs to maintain a transport protocol 2321 and a use requirement 2322. The transport protocol 2221 may be an SSL protocol, a TLS protocol, or the like. The use requirement 2322 includes use time, a use range, a use manner, and the like of the data 2311.

In some possible implementations, the control module 233 is configured to: obtain a transfer strategy 2331 based on the asset information 2313 of the data in the management module 231, and obtain a use strategy 2332 based on the use requirement 2322 in the interconnection module 232. The transfer strategy 2331 is used to restrict a transfer process of the data 2311. The use strategy 2332 is used to control a use process of the data 2311. For an implementation in which the control module 233 obtains the transfer strategy 2331, refer to the implementation in which the control module 213 obtains the transfer strategy 2131 in FIG. 3. For an implementation in which the control module 233 obtains the use strategy 2332, refer to the implementation in which the control module 213 obtains the use strategy 2132 in FIG. 3.

In some possible implementations, the management module 231, the interconnection module 232, and the control module 233 may be implemented by using software in the database system 23, or may be implemented by using hardware in the database system 23.

In some possible implementations, a connection system 20 (referred to as a first connection system) includes a first storage device, a first computing device, and a first database system. Another connection system 20 (referred to as a second connection system) includes a second storage device, a second computing device, and a second database system. When the first connection system needs to perform data transmission with the second connection system, data transmission may be implemented by connecting the first storage device to the second storage device, or data transmission may be implemented by connecting the first computing device to the second computing device. The first storage device has a first management module, a first interconnection module, and a first control module. The first computing device has a second management module, a second interconnection module, and a second control module. The second storage device has a third management module, a third interconnection module, and a third control module. The second computing device has a fourth management module, a fourth interconnection module, and a fourth control module. For the first storage device and the second storage device, refer to the storage device 21 in FIG. 3. For the first management module and the third management module, refer to the management module 211 of the storage device 21 in FIG. 3. For the first interconnection module and the third interconnection module, refer to the interconnection module 212 of the storage device 21 in FIG. 3. For the first control module and the third control module, refer to the control module 213 of the storage device 21 in FIG. 3. For the first computing device and the second computing device, refer to the computing device 22 in FIG. 4. For the second management module and the fourth management module, refer to the management module 221 of the computing device 22 in FIG. 4. For the second interconnection module and the fourth interconnection module, refer to the interconnection module 222 of the computing device 22 in FIG. 4. For the second control module and the fourth control module, refer to the control module 223 of the computing device 22 in FIG. 4.

The following specifically describes a data circulation method by using an example in which the first connection system is configured to process first data based on an indication of a storage device of the first data, the second connection system is configured to process the first data based on an indication of a requirement device of the first data, and implementing data transmission between the first storage device and the second storage device is used as an example of implementing data transmission between two connection systems. The storage device of the first data belongs to a first user, the requirement device of the first data belongs to a second user, and the storage device and the requirement device of the first data are different devices.

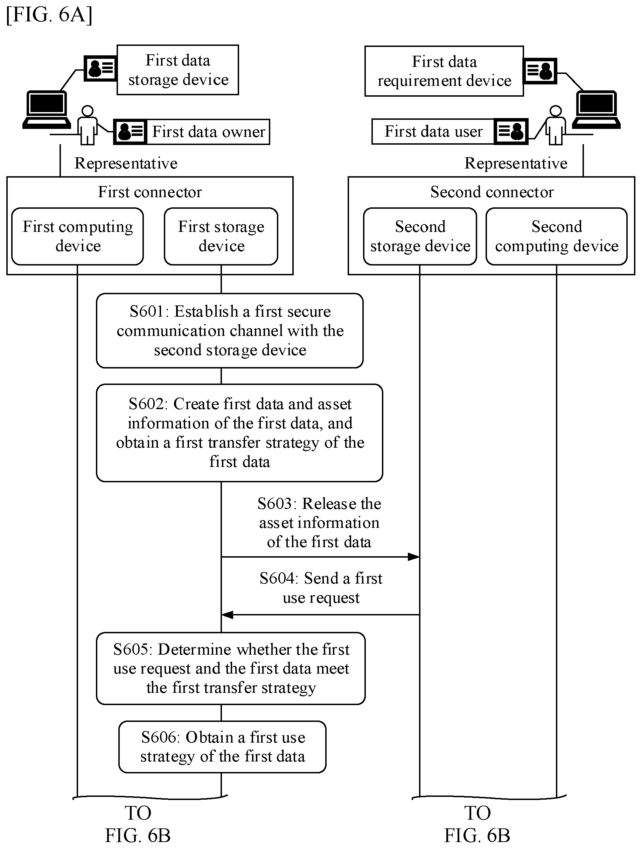

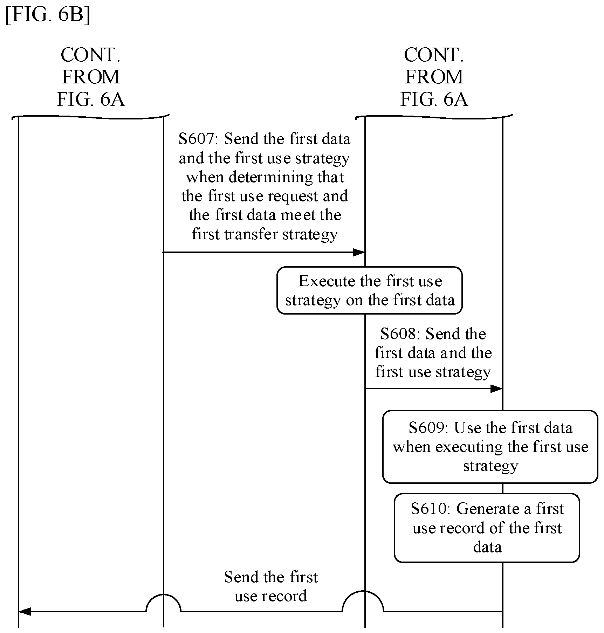

FIG. 6A and FIG. 6B are a schematic flowchart of a data circulation method according to this application. As shown in FIG. 6A and FIG. 6B, the data circulation method provided in this application includes the following steps.

S601: A first storage device establishes a first secure communication channel with a second storage device.

In some possible implementations, to ensure confidentiality and privacy of data transmitted between the first storage device and the second storage device, the first secure communication channel is established between a first interconnection module of the first storage device and a third interconnection module of the second storage device based on a transport protocol. The transport protocol may be the transport protocol 2121 in the interconnection module 212 in FIG. 3.

In a specific implementation, the first interconnection module and the third interconnection module determine a communication key based on an SSL or TLS four-way handshake, to establish the first secure communication channel, so that data transmitted between the two modules may be encrypted by using the communication key, to effectively prevent a third party from stealing the first data.

S602: The first storage device creates first data and asset information of the first data, and obtains a first transfer strategy of the first data.

In some possible implementations, a first management module of the first storage device obtains source data from a storage device, obtains description information of the first data based on the source data, and then creates the first data and the asset information of the first data based on the description information of the first data. The source data is created by a first user. The description information of the first data includes a type, a size, a format, and the like of the source data. The asset information of the first data includes a type, a size, a format, a purpose, available time, and the like of the first data. The first storage device may be the storage device 21 in FIG. 3, the first management module may be the management module 211 of the storage device 21 in FIG. 3, the first data may be the data 2111 in the management module 211 in FIG. 3, the description information of the first data may be the description information 2112 of the data in the management module 211 in FIG. 3, and the asset information of the first data may be the asset information 2113 of the data in the management module 211 in FIG. 3.

In some possible implementations, for an implementation in which the first storage device obtains the first transfer strategy, refer to the implementation in which the control module 213 obtains the transfer strategy 2131 in FIG. 3.

S603: The first storage device releases the asset information of the first data.

In some possible implementations, the first storage device may release the asset information of the first data in the following at least two implementations.

In a specific implementation, the first interconnection module of the first storage device releases the asset information of the first data obtained from the first management module to the outside of a first connection system. The first interconnection module may be the interconnection module 212 of the storage device 21 in FIG. 3.

In another specific implementation, the first interconnection module of the first storage device uploads the asset information of the first data to a data circulation service system, and the data circulation service system releases the asset information of the first data to the outside of a first connection system. The data circulation service system may be a system established by an independent third-party organization, and is configured to provide a public service for data circulation, including user identity authentication, device identity authentication, trusted application providing, management of asset information of data, data key management, data transaction process management, auditing and traceability, and the like.

S604: The second storage device sends a first use request to the first storage device based on the asset information of the first data. Correspondingly, the first storage device receives the first use request sent by the second storage device.

The second storage device may be the storage device 21 in FIG. 3.

In some possible implementations, generation of the first use request may include the following at least two implementations.

In a specific implementation, after the second storage device receives the asset information of the first data released by the first storage device, a third control module of the second storage device generates the first use request based on the asset information of the first data, and sends the first use request to the first storage device. The third control module may be the control module 213 of the storage device 21 in FIG. 3.

In another specific implementation, after receiving, by using an application on the second computing device, the asset information of the first data released by the first storage device, a data user uses the application to generate a first data request. Alternatively, when using an application on the second computing device, a data user matches data that needs to be accessed by the application with the asset information of the first data released by the first storage device, and generates the first data request after matching succeeds. Then, the second computing device sends the first data request to the second storage device. A first control module of the second storage device converts the first data request into the first use request, and sends the first use request to the first storage device. The second computing device may be the computing device 22 in FIG. 4.

S605: The first storage device determines whether the first use request and the first data meet the first transfer strategy.

In some possible implementations, the first use request includes identity information of the data user, identity information of the second storage device, identity information of the second computing device, request content, request use time, a request use range, a request use manner, and the like.

In some possible implementations, that the first storage device determines whether the first use request meets the first transfer strategy includes the following steps.
(1) Verify whether an identity is correct. If the first transfer strategy specifies a user of the first data, the first control module of the first storage device determines whether the identity information (for example, a certificate or a trusted credential) of the data user, the identity information (for example, a device certificate) of the second storage device, and the identity information (for example, a device certificate) of the second computing device in the first use request meet the user specified in the first transfer strategy. If the specification is met, it indicates that the data user is trusted, the second storage device is trusted, and the second computing device is trusted. If the specification is not met, it indicates that the first use request is inappropriate, and the first storage device rejects the first use request. The first control module may be the control module 213 of the storage device 21 in FIG. 3.
(2) Verify whether the request content is appropriate. If the first transfer strategy specifies access content of the first data, the first control module of the first storage device determines whether the request content in the first use request exceeds the access content specified in the first transfer strategy. If the request content does not exceed the specified access content, it indicates that the request content is appropriate. If the request content exceeds the specified access content, it indicates that the request content is inappropriate, and the first storage device notifies the data user of an inappropriate part of the request content. For example, if the first transfer strategy specifies that the access content of the first data is non-confidential data, and the request content in the first use request includes confidential data and non-confidential data, the request content exceeds the specified access content. In this case, the first storage device notifies the data user that "the first use request requiring to obtain confidential data does not meet the specification".
(3) Verify whether the request requirement is appropriate. If use information of the first data is set in the first transfer strategy, the first control module of the first storage device determines whether the request requirement (for example, the request use time, the request use range, and the request use manner) in the first use request matches the use information set in the first transfer strategy. If matching succeeds, it indicates that the request requirement is appropriate. If matching fails, it indicates that the request requirement is partially inappropriate, and the first storage device notifies the data user of an inappropriate part in the request requirement.

It should be understood that specific content of verifying the first use request is merely used as an example, and is not specifically limited herein.

It should be understood that in this technical solution, the foregoing Step S601 may be performed first, and then the operation of determining, by the first storage device, whether the first use request meets the first transfer strategy is performed; or the operation of determining, by the first storage device, whether the first use request meets the first transfer strategy may be performed first, and then the foregoing Step S601 is performed after the first storage device determines that the first use request meets the first transfer strategy.

In some possible implementations, that the first storage device determines whether the first data meets the first transfer strategy includes the following steps.
(1) Check the type of the first data. If the first transfer strategy specifies a data type that is allowed to be transferred, the first control module of the first storage device determines whether the type of the first data exceeds the data type specified in the first transfer strategy. If the type of the first data does not exceed the specified data type, it indicates that all content of the first data can be transmitted to the second storage device. If the type of the first data exceeds the specified data type, it indicates that a part of data in the first data cannot be transmitted to the second storage device, and the first storage device notifies the data user of the part of data that cannot be transmitted. For example, if the first transfer strategy specifies that the data type that is allowed to be transferred is non-sensitive data, and the first data includes both sensitive data and non-sensitive data, the type of the first data exceeds the specified data type. In this case, the first storage device notifies the data user that "the first data cannot be sent because the first data contains sensitive data".
(2) Check estimated sending time of the first data. If the first transfer strategy specifies an available time period of the first data, the first control module of the first storage device determines whether the estimated sending time of the first data exceeds the available time period specified in the first transfer strategy. If the estimated sending time of the first data does not exceed the specified available time period, it indicates that the first data can be transmitted to the second storage device at the estimated sending time. If the estimated sending time of the first data exceeds the specified available time period, it indicates that the first data cannot be transmitted to the second storage device at the estimated sending time, and the first storage device rejects to send the first data to the second storage device, and notifies the data user.

It should be understood that the specific content of checking the first data is merely used as an example, and is not specifically limited herein.

In conclusion, the first transfer strategy may check the first use request and the first data, to control sending of the first data by the first storage device.

In some possible implementations, in addition to the foregoing that the first storage device needs to determine, after receiving the first use request, whether the first data meets the first transfer strategy, before transmitting data to the second storage device each time, the first storage device needs to determine whether the data meets a transfer strategy of the data, to avoid a problem like data leakage in a circulation process.

S606: The first storage device obtains a first use strategy of the first data.

In some possible implementations, the first use strategy is obtained based on a use requirement. Specifically, after the first secure communication channel in Step S601 is established, the first connection system and the second connection system may respectively use the first interconnection module and the third interconnection module to negotiate the use requirement of the first data through the first secure communication channel. Then, the first control module of the first storage device obtains the first use strategy based on the use requirement. The use requirement may be the use requirement 2122 in the interconnection module 212 in FIG. 3. For an implementation in which the first control module obtains the first use strategy, refer to the implementation in which the control module 213 obtains the use strategy 2132 in FIG. 3. For brevity of the specification, details are not described herein again.

In some possible implementations, the first transfer strategy may be obtained by using the foregoing Step S602, or may be obtained based on a transfer requirement. Specifically, after the first secure communication channel in Step S601 is established, the first connection system and the second connection system may respectively use the first interconnection module and the third interconnection module to negotiate the transfer requirement of the first data through the first secure communication channel. Then, the first control module of the first storage device obtains the first transfer strategy based on the transfer requirement. A process in which the first control module obtains the first transfer strategy based on the transfer requirement is as follows: After receiving the transfer requirement sent by the first interconnection module, the first control module sets, based on the transfer requirement, the first transfer strategy by using a strategy resource in a strategy management module. Alternatively, after the first control module sends the received transfer requirement to a strategy management module, the strategy management module sets, based on the transfer requirement, the first transfer strategy by using the strategy resource, and then sends, to the first control module, the first transfer strategy obtained after setting.

S607: When determining that the first use request and the first data meet the first transfer strategy, the first storage device sends the first data and the first use strategy to the second storage device through the first secure communication channel. Correspondingly, the second storage device receives, through the first secure communication channel, the first data and the first use strategy that are sent by the first storage device.

In some possible implementations, that the first storage device sends the first data and the first use strategy to the second storage device through the first secure communication channel may include the following at least four implementations.

In a specific implementation, in the first storage device, the first interconnection module obtains the first data from the first management module, obtains the first use strategy from the first control module, binds the first data and the first use strategy (for example, puts the first use strategy in metadata of the first data, and puts a link of the first use strategy in the first data, so that the first use strategy needs to be accessed before the first data is accessed), that is, associates the first data and the first use strategy with each other, and then sends the bound first data and first use strategy to the third interconnection module of the second storage device through the first secure communication channel. Specifically, the first interconnection module of the first storage device may first send the first data, and then send the first use strategy, or may first send the first use strategy, and then send the first data, or may send the first data and the first use strategy together.

In another specific implementation, in the first storage device, the first control module obtains the first data from the first management module, binds the first data and the first use strategy, and then sends the bound first data and first use strategy to the first interconnection module, and the first interconnection module sends the bound first data and first use strategy to the third interconnection module through the first secure communication channel.

In another specific implementation, in the first storage device, the first control module obtains the first data from the first management module, encapsulates the first data and the first use strategy into a new data packet, and then sends the new data packet to the first interconnection module, and the first interconnection module sends the new data packet to the third interconnection module through the first secure communication channel.

In another specific implementation, in the first storage device, the first control module obtains the first data from the first management module, encrypts the first data and the first use strategy, encapsulates the encrypted first data and first use strategy into a new data packet, and then sends the new data packet to the first interconnection module, and the first interconnection module sends the new data packet to the third interconnection module through the first secure communication channel.

It should be understood that the foregoing manner of binding or encapsulating the first data and the first use strategy is merely used as an example, and is not specifically limited herein.

In some possible implementations, in the second storage device, the third interconnection module stores the received first data and first use strategy in the third management module.

S608: The second storage device sends the first data and the first use strategy to the second computing device when executing the first use strategy on the first data. Correspondingly, the second computing device receives the first data and the first use strategy that are sent by the second storage device.

In some possible implementations, the data user generates a first data request when using the application on the second computing device, which corresponds to the first data request generated in Step S603. Then, the second computing device sends the first data request to the second storage device. After receiving the first data request, the third control module of the second storage device executes the first use strategy obtained from the third management module, to control behavior of obtaining the first data in the third management module by the second computing device. Particularly, when the first use strategy is encapsulated, the first use strategy is decapsulated first, and then the first use strategy is executed. For example, if the first use strategy specifies a quantity of access times of the first data, the third control module records a quantity of times of accessing the first data by the second computing device. When the quantity of times of accessing the first data by the second computing device exceeds the specified quantity of access times, the third control module prohibits an access operation of the second computing device. Alternatively, if the first use strategy specifies a read time period of the first data, the third control module records time for reading the first data by the second computing device. When the second computing device continues to read the first data outside the specified read time period, the third control module prohibits a read operation of the second computing device. In conclusion, the third control module may control, by executing the first use strategy on the first data, the behavior of obtaining the first data by the second computing device, that is, may control use of the first data by the second computing device, to effectively ensure security of the first data in a use process.

It should be understood that the sending object of the second storage device in Step S608 is merely used as an example, and is not specifically limited herein. For example, the second storage device may further send the first data and the first use strategy to a second database system when executing the first use strategy on the first data. The second database system may be the database system 23 in FIG. 5.

S609: The second computing device uses the first data when executing the first use strategy.

In some possible implementations, a fourth control module of the second computing device executes the first use strategy sent by the second storage device, to control behavior of using the first data by the application on the second computing device, for example, behavior of accessing, computing, copying, or forwarding the first data by the application, that is, control use of the first data by the second computing device. For example, if the first use strategy specifies the available time period of the first data, the fourth control module records time for using the first data by the application. When the application continues to use, outside the specified available time period, the first data for computing, the fourth control module deletes the first data in the application. In conclusion, the fourth control module may control, by executing the first use strategy, behavior of using the first data by the application on the second computing device, to effectively ensure security of the first data in the use process. The fourth control module may be the control module 223 of the computing device 22 in FIG. 4.

In a specific implementation, new data generated in a process in which the application uses the first data also needs to meet specific content in the first use strategy, that is, new data generated by any processing performed by the second computing device on the first data is bound to the first use strategy. For example, if the first use strategy specifies an IP address of a device that uses the first data, the new data can be used in only the specified device.

In some possible implementations, a computing device of a connection system has a secure computing environment, and the secure computing environment is a secure isolation environment, and is used to protect security of the computing device. Therefore, the first computing device has a first secure computing environment, and the second computing device has a second secure computing environment. In this case, the fourth control module of the second computing device may execute the first use strategy in the second secure computing environment, and control behavior like accessing, computing, copying, and forwarding the first data by the application. In this way, security in executing the first use strategy and security in using the first data can be protected by using the second secure computing environment.

In some possible implementations, the second secure computing environment may include the following at least three implementations.

In a specific implementation, the fourth control module of the second computing device intercepts and manages a data input interface and a data output interface of the application on the second computing device, to provide the second secure computing environment. Specifically, when the second computing device has an operating system, in a process in which the application uses the first data, the fourth control module indicates the operating system to disable a data input interface and a data output interface of the second computing device. In this case, the application also disables an external data input interface and an external data output interface, to prevent transferring of the first data to the outside of the application, or even the outside of the second computing device. Alternatively, the fourth control module changes a setting of the application, so that the application disables the data input interface and the data output interface of the application in a process of using the first data, to prevent transferring of the first data to the outside of the application.

In another specific implementation, a trusted execution environment (trusted execution environment, TEE) is deployed on the second computing device, to provide the second secure computing environment. Specifically, the fourth control module and the application on the second computing device are run in the trusted execution environment, so that processing of the first data by the fourth control module and use of the first data by the application are implemented in the trusted execution environment. The TEE may be SGX (software guard extensions), SEV (secure encrypted virtualization), Trust Zone, or the like.

In another specific implementation, a virtual machine or a container is installed on the second computing device, to provide the second secure computing environment. Specifically, the fourth control module and the application on the second computing device are both run on the virtual machine or the container, to provide an isolated environment for processing the first data by the fourth control module and using the first data by the application.

It should be understood that the foregoing implementation of the second secure computing environment is merely used as an example. With reference to different software or hardware, different second secure computing environments may be provided for the second computing device based on different security requirements. This is not specifically limited herein.

In some possible implementations, when the first data obtained from the second storage device is a ciphertext, the fourth control module decrypts the ciphertext, and provides the decrypted first data for the application for use. After the use process of the first data ends, the fourth control module encrypts the first data and new data generated in the use process, to form a ciphertext, and then sends the ciphertext to the second storage device or the second database system for storage, to ensure that the first data exists in a format of ciphertext outside the use process.

It should be understood that, in Step S609, the first use strategy executed by the second computing device and the first data provided for the application for use that are from the second storage device are merely used as an example, and are not specifically limited herein. The first use strategy executed by the second computing device and the first data provided for the application for use may alternatively come from the second database system. In addition, the first use strategy may arrive at the second computing device earlier than the first data in the second database system, or may arrive at the second computing device together with the first data in the second database system. The first data and the first use strategy in the second database system come from the second storage device.

S610: The second computing device generates a first use record of the first data, and reports the first use record to the first computing device.

In some possible implementations, the fourth control module of the second computing device generates the first use record (for example, a behavior log or a management log) of the first data, to record use of the first data by the second computing device, including behavior of obtaining the first data in the second storage device and behavior of using the first data by the application. Then, the second computing device reports the first use record to the first computing device, so that a data owner can determine, based on the first use record, whether use of the first data by the second computing device meets the first use strategy and/or the first use request, to master a use status of the first data in real time, and respond to an exception in a timely manner. That the second computing device reports the first use record to the first computing device may include the following at least two implementations.

In a specific implementation, the second computing device may directly send the first use record to the first computing device. The first computing device may store the received first use record in the first storage device, the first computing device, or the first database system. The first database system may be the database system 23 in FIG. 5.

In another specific implementation, the second computing device may upload the first use record to a data circulation service system, and the first computing device downloads the first use record from the data circulation service system. In addition, the first computing device may further perform, in the data circulation service system, auditing, risk identification, source tracing analysis, and the like on use behavior of the data user based on the first use record. The data circulation service system is the data circulation service system in Step S602.

In some possible implementations, the second computing device has the second secure computing environment. In this case, the fourth control module generates the first use record in the second secure computing environment, to ensure that the first use record cannot be tampered with, so as to ensure security and reliability of the first use record.

It should be understood that, in the foregoing embodiment, data transmission between the first storage device and the second storage device is merely used as an example of data transmission between the first connection system and the second connection system. This is not specifically limited herein. For example, data transmission between the first computing device and the second computing device may be further implemented, to implement data transmission between the first connection system and the second connection system.

If data transmission between the first computing device and the second computing device is implemented, operations performed by the first storage device in steps S601, S602, S603, S604, S605, S606, and S607 in the foregoing embodiment are performed by the first computing device, operations performed by the first management module of the first storage device are performed by the second management module of the first computing device, operations performed by the first interconnection module of the first storage device are performed by the second interconnection module of the first computing device, and operations performed by the first control module of the first storage device are performed by the second control module of the first computing device. Correspondingly, in the foregoing embodiment, operations performed by the second storage device in steps S603, S605, and S607 are performed by the second computing device, operations performed by the third management module of the second storage device are performed by a fourth management module of the second computing device, operations performed by a third interconnection module of the second storage device are performed by the fourth interconnection module of the second computing device, and operations performed by the third control module of the second storage device are performed by the fourth control module of the second computing device. After receiving, through the first secure communication channel, the first data and the first use strategy that are sent by the first computing device, the second computing device directly uses the first data when executing the first use strategy, that is, directly performs Step S609 in the foregoing embodiment. Therefore, Step S608 in the foregoing embodiment is not performed when data transmission between the first computing device and the second computing device is implemented.

It should be understood that data transmission between the first database system and the second database system may be further implemented, to implement data transmission between the first connection system and the second connection system. If data transmission between the first database system and the second database system is implemented, operations performed by the first storage device in steps S601, S602, S603, S604, S605, S606, and S607 in the foregoing embodiment are performed by the first database system, operations performed by the first management module of the first storage device are performed by a fifth management module of the first database system, operations performed by the first interconnection module of the first storage device are performed by a fifth interconnection module of the first database system, and operations performed by the first control module of the first storage device are performed by a fifth control module of the first database system. Correspondingly, in the foregoing embodiment, operations performed by the second storage device in steps S603, S605, and S607 are performed by the second database system, operations performed by the third management module of the second storage device are performed by a sixth management module of the second database system, operations performed by the third interconnection module of the second storage device are performed by a sixth interconnection module of the second database system, and operations performed by the third control module of the second storage device are performed by a sixth control module of the second database system. For the first database system and the second database system, refer to the database system 23 in FIG. 5. For the fifth management module and the sixth management module, refer to the management module 231 in the database system 23 in FIG. 5. For the fifth interconnection module and the sixth interconnection module, refer to the interconnection module 232 in the database system 23 in FIG. 5. For the fifth control module and the sixth control module, refer to the control module 233 in the database system 23 in FIG. 5.

In conclusion, the following advantages are achieved by implementing embodiments of this application.

According to a first aspect, an internal structure of a connection system and a method for implementing data circulation by two connection systems based on internal structures of the two connection systems are provided, so that a process in which the first data circulates from the data owner to the data user includes various data circulation stages such as creating the first data, releasing the asset information, determining the first use strategy, transmitting the first data, storing the first data, using the first data, and monitoring use of the first data, and security and reliability can be ensured. Therefore, in embodiments of this application, a feasible solution is provided to ensure secure circulation of the first data between any two data entities and avoid problems such as data abuse and data leakage in a circulation process.

According to a second aspect, compared with a case in which the first data is directly sent to the requirement device of the first data, and consequently, the use process of the first data in the requirement device cannot be managed and controlled, in this technical solution, the second storage device that can execute the first use strategy processes the first data based on an indication of the requirement device of the first data, so that behavior, such as accessing, obtaining, and using the first data by the second computing device, is always performed under a constraint of the first use strategy. Therefore, security management and control can be performed on use behavior of the data user, and security of the first data in the circulation process is ensured.

According to a third aspect, secure transmission of the first data can be implemented based on storage devices of the two connection systems, so that when the application on the second computing device needs to use the first data, the first data in the second storage device in the same connection system can be directly accessed, and original behavior of using the first data by the application on the second computing device does not need to be changed. In this way, the data user can directly deploy the application, and does not need to greatly adjust the application for using the first data. Therefore, circulation performance of the first data in a plurality of applications is improved.

According to a fourth aspect, the first transfer strategy is used to verify appropriateness of the first use request of the data user, and the first transfer strategy is used to check compliance of the first data, so that a transfer process of the first data can be controlled, to ensure security of the first data in the transfer process. In addition, only when the first use strategy is executed, behavior such as accessing, obtaining, and using the first data is supported, so that security management and control can be performed on the use behavior of the data user, to ensure security of the first data in the transfer process.

According to a fifth aspect, the second computing device executes the first use strategy in the second secure computing environment, and provides the first data for the application, so that an execution process of the first use strategy can be ensured to be not interfered, and leakage of the first data can be avoided.

Based on the foregoing first connection system, second connection system, and data circulation method, the following specifically describes another data circulation method by using an example in which the first connection system is configured to process the first data based on an indication of a storage device of the first data, the second connection system is configured to process the first data based on an indication of a requirement device of the first data, and implementing data transmission between the first storage device and the second storage device is used as an example of implementing data transmission between the first connection system and the second connection system, and by using an example in which a third connection system is configured to process second data based on an indication of a storage device of the second data, the first connection system is configured to process the second data based on an indication of a requirement device of the second data, and implementing data transmission between a third storage device and the first storage device is used as an example of implementing data transmission between the third connection system and the first connection system. The requirement device of the second data and the storage device of the first data are different devices, or the requirement device of the second data and the storage device of the first data are a same device. The third connection system includes a third storage device, a third computing device, and a third database system. For the third storage device, refer to the storage device 21 in FIG. 3. For the third computing device, refer to the computing device 22 in FIG. 4. For the third database system, refer to the database system 23 in FIG. 5.

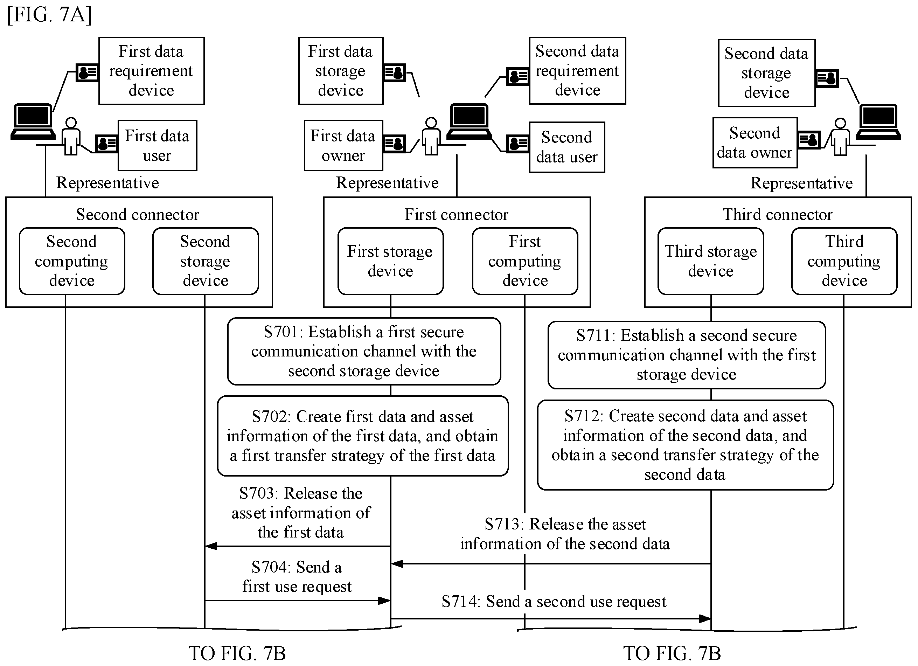

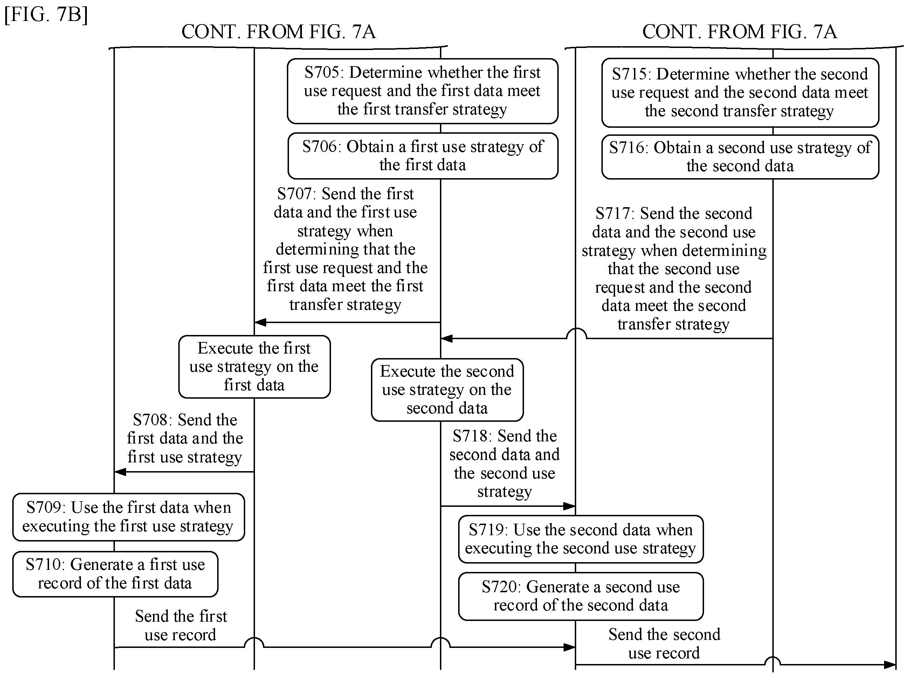

FIG. 7A and FIG. 7B are a schematic flowchart of another data circulation method according to this application. As shown in FIG. 7A and FIG. 7B, the data circulation method provided in this application includes the following steps.

S701: A first storage device establishes a first secure communication channel with a second storage device.

S702: The first storage device creates first data and asset information of the first data, and obtains a first transfer strategy of the first data.

S703: The first storage device releases the asset information of the first data.

S704: The second storage device sends a first use request to the first storage device based on the asset information of the first data. Correspondingly, the first storage device receives the first use request sent by the second storage device.

S705: The first storage device determines whether the first use request and the first data meet the first transfer strategy.

S706: The first storage device obtains a first use strategy of the first data.

S707: When determining that the first use request and the first data meet the first transfer strategy, the first storage device sends the first data and the first use strategy to the second storage device through the first secure communication channel. Correspondingly, the second storage device receives, through the first secure communication channel, the first data and the first use strategy that are sent by the first storage device.

S708: The second storage device sends the first data and the first use strategy to the second computing device when executing the first use strategy on the first data. Correspondingly, the second computing device receives the first data and the first use strategy that are sent by the second storage device.

S709: The second computing device uses the first data when executing the first use strategy.

S710: The second computing device generates a first use record of the first data, and reports the first use record to the first computing device.

For execution processes of the foregoing Step S701 to Step S710, refer to the execution processes of Step S601 to Step S610 in FIG. 6A and FIG. 6B. For brevity of the specification, details are not described herein again.

S711: A third storage device establishes a second secure communication channel with the first storage device.

S712: The third storage device creates second data and asset information of the second data, and obtains a second transfer strategy of the second data.

S713: The third storage device releases the asset information of the second data.

S714: The first storage device sends a second use request to the third storage device based on the asset information of the second data. Correspondingly, the third storage device receives the second use request sent by the first storage device.

S715: The third storage device determines whether the second use request and the second data meet the second transfer strategy.

S716: The third storage device obtains a second use strategy of the second data.

S717: When determining that the second use request and the second data meet the second transfer strategy, the third storage device sends the second data and the second use strategy to the first storage device through the second secure communication channel. Correspondingly, the first storage device receives, through the second secure communication channel, the second data and the second use strategy that are sent by the third storage device.

S718: The first storage device sends the second data and the second use strategy to the first computing device when executing the second use strategy on the second data. Correspondingly, the first computing device receives the second data and the second use strategy that are sent by the first storage device.

S719: The first computing device uses the second data when executing the second use strategy.

In some possible implementations, a second control module of the second computing device may execute the second use strategy in a first secure computing environment, and provide the second data for an application. In this way, security in executing the second use strategy and security in using the second data can be protected by using the first secure computing environment. For an implementation of the first computing environment, refer to the implementation of the second computing environment in Step S609 in FIG. 6A and FIG. 6B.

S720: The first computing device generates a second use record of the second data, and reports the second use record to a third computing device.

For execution processes of the foregoing Step S711 to Step S720, refer to the execution processes of Step S601 to Step S610 in FIG. 6A and FIG. 6B. For brevity of the specification, details are not described herein again.

It should be understood that, in this technical solution, the foregoing Steps S701 to S710 may be performed before the foregoing Steps S711 to S720, or the foregoing Steps S711 to S720 may be performed before the foregoing Steps S701 to S710, or the foregoing Steps S701 to S710 and the foregoing Steps S711 to S720 may be performed in a cross manner. For example, the foregoing Step S701 is performed first, then the foregoing Step S711 is performed, then the foregoing Step S702 is performed, then the foregoing Step S712, and so on. Alternatively, the foregoing Steps S711, S712, and S713 are performed first, then the foregoing Steps S701, S702, and S703 are performed, then the foregoing Steps S714, S715, and S716 are performed, and then the foregoing Steps S704, S705, and S706 are performed, and so on.

It should be understood that, in the foregoing embodiment, implementing data transmission between the third storage device and the first storage device is merely used as an example of implementing data transmission between the third connection system and the first connection system. This is not specifically limited herein. For example, data transmission between the third computing device and the first computing device may be implemented, or data transmission between the third database system and the first database system may be implemented, to implement data transmission between the third connection system and the first connection system. For brevity of the specification, details are not described herein again.

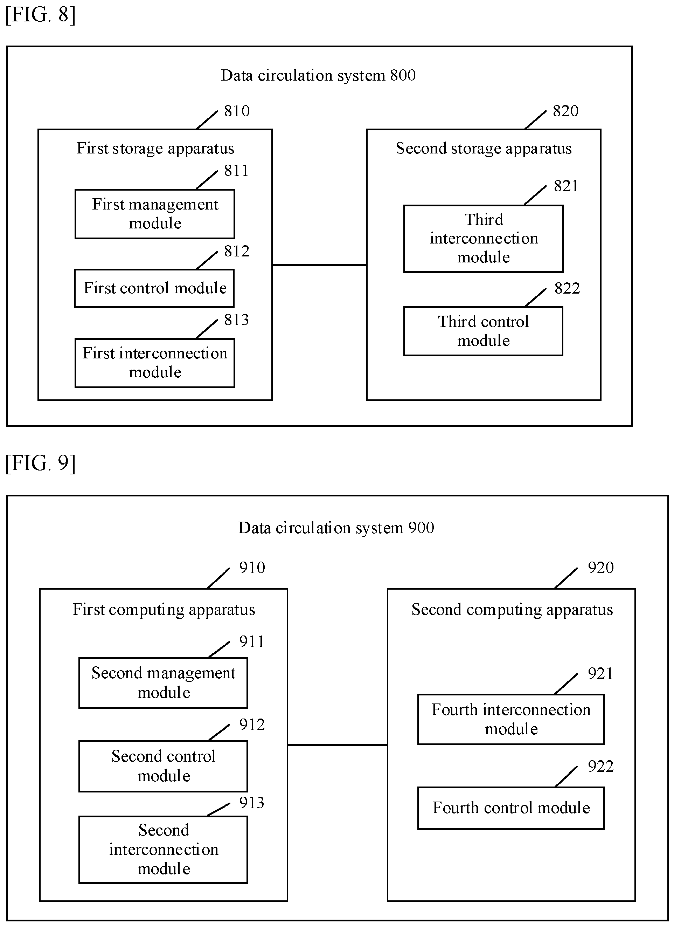

FIG. 8 is a diagram of a structure of a data circulation system according to this application. The data circulation system may be configured to implement the foregoing data circulation method. As shown in FIG. 8, the data circulation system 800 includes a first storage apparatus 810 and a second storage apparatus 820. The first storage apparatus 810 includes a first management module 811, a first control module 812, and a first interconnection module 813. The second storage apparatus 820 includes a third interconnection module 821 and a third control module 822.

The first management module 811 is configured to obtain source data from a storage apparatus, and generate first data based on the source data.

The first control module 812 is configured to obtain a first transfer strategy and a first use strategy of the first data.

The first interconnection module 813 is configured to send the first data and the first use strategy to the second storage apparatus 820 when determining that the first data meets the first transfer strategy.

The third interconnection module 821 is configured to receive the first data and the first use strategy of the first data that are sent by the first interconnection module 813 of the first storage apparatus 810.

The third control module 822 is configured to send the first data and the first use strategy to a second computing apparatus when executing the first use strategy on the first data, to control use of the first data by the second computing apparatus.

The first use strategy is a strategy indicating the second storage apparatus 820 to use the first data. The storage apparatus belongs to a first user. The second storage apparatus 820 and the second computing apparatus belong to a second connection system. The second storage apparatus 820 and the second computing apparatus are configured to process the first data based on an indication of a requirement apparatus of the first data, that is, the second connection system is configured to process the first data based on the indication of the requirement apparatus of the first data. The requirement apparatus of the first data belongs to a second user, and the storage apparatus and the requirement apparatus of the first data are different apparatuses.

In some possible implementations, the first interconnection module 813 is specifically configured to: receive a first use request used to request the first data, and send the first data and the first use strategy to the second storage apparatus 820 when determining that the first use request and the first data meet the first transfer strategy.

In some possible implementations, the first interconnection module 813 is further configured to receive second data and a second use strategy of the second data that are sent by a third storage apparatus.

The first control module 812 is further configured to send the second data and the second use strategy to a first computing apparatus when executing the second use strategy on the second data, to control use of the second data by the first computing apparatus.

In some possible implementations, the first transfer strategy includes one or more of a user and access content of the first data, and the first transfer strategy is generated based on a transfer requirement or asset information of the first data. The transfer requirement is determined by the first storage apparatus 810 and the second storage apparatus 820 through negotiation, the asset information is generated by the first management module 811, and the asset information includes one or more of a type, a size, a format, a purpose, and available time of the first data.

In some possible implementations, the first use strategy includes one or more of use time, a use range, and a use manner of the first data.

FIG. 9 is a diagram of a structure of another data circulation system according to this application. The data circulation system may be configured to implement the foregoing data circulation method. As shown in FIG. 9, the data circulation system 900 includes a first computing apparatus 910 and a second computing apparatus 920. The first computing apparatus 910 includes a second management module 911, a second control module 912, and a second interconnection module 913. The second computing apparatus 920 includes a fourth interconnection module 921 and a fourth control module 922.

The second management module 911 is configured to obtain source data from a storage apparatus, and generate first data based on the source data.

The second control module 912 is configured to obtain a first transfer strategy and a first use strategy of the first data.

The second interconnection module 913 is configured to send the first data and the first use strategy to the second computing apparatus 920 when determining that the first data meets the first transfer strategy.

The fourth interconnection module 921 is configured to receive the first data and the first use strategy of the first data that are sent by the second interconnection module 913 of the first computing apparatus 910.

The fourth control module 922 is configured to use the first data when executing the first use strategy.

The first use strategy is a strategy indicating the second computing apparatus 920 to use the first data. The first computing apparatus 910 is configured to process the first data based on an indication of a storage apparatus. The storage apparatus belongs to a first user. The second computing apparatus 920 is configured to process the first data based on an indication of a requirement apparatus of the first data. The requirement apparatus of the first data belongs to a second user, and the storage apparatus and the requirement apparatus of the first data are different apparatuses.

In some possible implementations, the second interconnection module 913 is specifically configured to: receive a first use request that is sent by the second computing apparatus 920 and that is used to request the first data, and send the first data and the first use strategy to the second computing apparatus 920 when determining that the first use request and the first data meet the first transfer strategy.

In some possible implementations, the second computing apparatus 920 has a second secure computing environment. In this case, the fourth control module 922 is specifically configured to: execute the first use strategy on the first data, generate a first use record, and upload the first use record to the first computing apparatus 910 in the second secure computing environment, to control use of the first data by an application on the second computing apparatus 920. The first use record is a record of using the first data by the second computing apparatus 920. The second secure computing environment is a secure isolation environment, is used to protect security of the second computing apparatus 920, security in executing the first use strategy, and security in using the first data, and is implemented by disabling a data input interface and a data output interface when the second computing apparatus 920 uses the first data, or implemented by deploying a trusted execution environment in the second computing apparatus 920, or implemented by deploying a virtual machine or a container in the second computing apparatus 920.

In some possible implementations, the first computing apparatus 910 is further configured to: receive the first use record of the first data from the second computing apparatus 920, and determine, based on the first use record, whether use of the first data by the second computing apparatus 920 meets the first use strategy, where the first use record is a record of using the first data by the second computing apparatus 920.

In some possible implementations, the second interconnection module 913 is further configured to: receive second data and a second use strategy of the second data that are sent by a third computing apparatus, and execute the second use strategy on the second data to control use of the second data by the first computing apparatus 910. The first computing apparatus 910 is configured to process the second data based on an indication of a requirement apparatus of the second data, and the requirement apparatus of the second data and the storage apparatus are different apparatuses, or the requirement apparatus of the second data and the storage apparatus are a same apparatus.

In some possible implementations, the first computing apparatus 910 has a first secure computing environment, and the second control module 912 is specifically configured to: execute the second use strategy on the second data, generate the second use record, and upload the second use record to a third computing apparatus in a first secure computing environment, to control use of the second data by the first computing apparatus 910. The second use record is a record of using the second data by the first computing apparatus 910. The first secure computing environment is a secure isolation environment, is used to protect security of the first computing apparatus 910, security in executing the second use strategy, and security in using the second data, and is implemented by disabling a data input interface and a data output interface when the first computing apparatus 910 uses the second data, or implemented by deploying a trusted execution environment in the first computing apparatus 910, or implemented by deploying a virtual machine or a container in the first computing apparatus 910.

In some possible implementations, the first transfer strategy includes one or more of a user and access content of the first data, and the first transfer strategy is generated based on a transfer requirement or asset information of the first data. The transfer requirement is determined by the first computing apparatus 910 and the second computing apparatus 920 through negotiation, the asset information is generated by the first computing apparatus 910, and the asset information includes one or more of a type, a size, a format, a purpose, and available time of the first data.

In some possible implementations, the first use strategy includes one or more of use time, a use range, and a use manner of the first data.

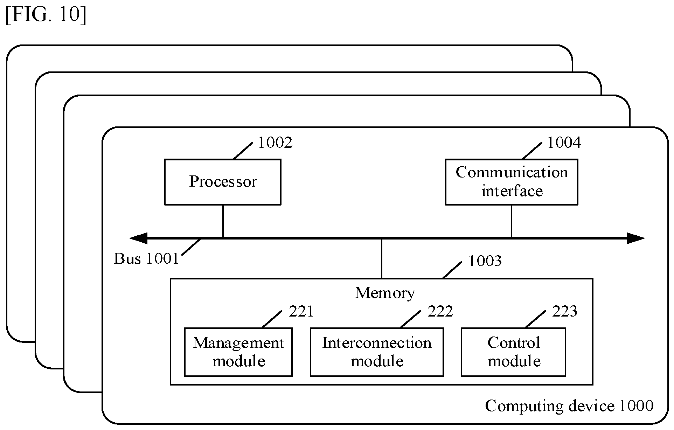

FIG. 10 is a diagram of a structure of a computing device cluster according to this application. The computing device cluster provided in this application includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 10, the computing device cluster includes at least one computing device 1000.

The computing device 1000 includes a bus 1001, a processor 1002, a memory 1003, and a communication interface 1004. The processor 1002, the memory 1003, and the communication interface 1004 communicate with each other through the bus 1001. It should be understood that quantities of processors and memories in the computing device 1000 are not limited in this application.

The bus 1001 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10. However, this does not indicate that there is only one bus or only one type of bus. The bus 1001 may include a path for transmitting information between components (such as the memory 1003, the processor 1002, and the communication interface 1004) in the computing device 1000.

The processor 1002 may include any one or more of processors such as a central processing unit (central processing unit, CPU), a graphics processing unit (graphics processing unit, GPU), a microprocessor (micro processor, MP), or a digital signal processor (digital signal processor, DSP).

The memory 1003 may include a volatile memory (volatile memory), for example, a random access memory (random access memory, RAM). The memory 1003 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 1003 stores executable program code. The processor 1002 executes the executable program code to respectively implement functions of the management module 221, the interconnection module 222, and the control module 223 of the computing device 22, to implement operations implemented by the first computing device, operations implemented by the second computing device, or operations implemented by the third computing device in the foregoing data circulation method. In other words, the memory 1003 stores instructions used by the first computing device, the second computing device, or the third computing device to perform the data circulation method.

The communication interface 1004 uses a transceiver module, for example, but not limited to, a network interface card or a transceiver, to implement communication between the computing device 1000 and another device or a communication network.

In some possible implementations, the memories 1003 in the one or more computing devices 1000 in the computing device cluster may store same instructions for performing the data circulation method.

In some possible implementations, the memories 1003 in the one or more computing devices 1000 in the computing device cluster may alternatively store some instructions respectively for performing the data circulation method. In other words, a combination of the one or more computing devices 1000 may jointly execute the instructions for performing the data circulation method.

It should be noted that the memories 1003 in different computing devices 1000 in the computing device cluster may store different instructions, and different instructions are separately used to perform some functions of the computing device 22. In other words, the instructions stored in the memories 1003 in different computing devices 1000 may implement functions of one or more of the management module 221, the interconnection module 222, and the control module 223.

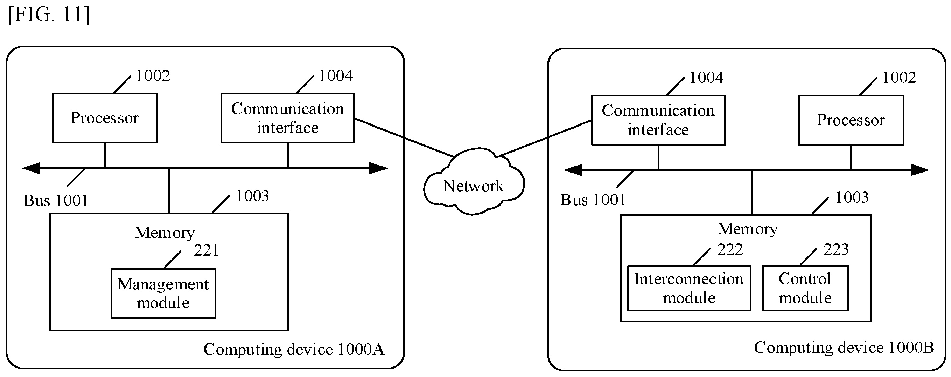

FIG. 11 is a diagram of a structure of another computing device cluster according to this application. In some possible implementations, the one or more computing devices in the computing device cluster may be connected over a network. The network may be a wide area network, a local area network, or the like. As shown in FIG. 11, two computing devices 1000A and 1000B are connected to each other through a network. Specifically, each computing device is connected to the network through a communication interface of the computing device. In this possible implementation, a memory 1003 in the computing device 1000A stores instructions for performing functions of the management module 221. In addition, the memory 1003 in the computing device 1000B stores instructions for performing functions of the interconnection module 222 and the control module 223.

A connection manner between computing device clusters shown in FIG. 11 may be that, in consideration that the data circulation method provided in this application requires storage of a large amount of data, it is considered that functions implemented by the management module 221 are executed by the computing device 1000A.

It should be understood that functions of the computing device 1000A shown in FIG. 11 may alternatively be completed by a plurality of computing devices 1000. Similarly, functions of the computing device 1000B may alternatively be completed by a plurality of computing devices 1000.

An embodiment of this application further provides another computing device cluster. For a connection relationship between computing devices in the computing device cluster, refer to the connection manner in the computing device cluster in FIG. 10 and FIG. 11. A difference lies in that memories 1003 in one or more computing devices 1000 in the computing device cluster may store same instructions for performing the data circulation method.

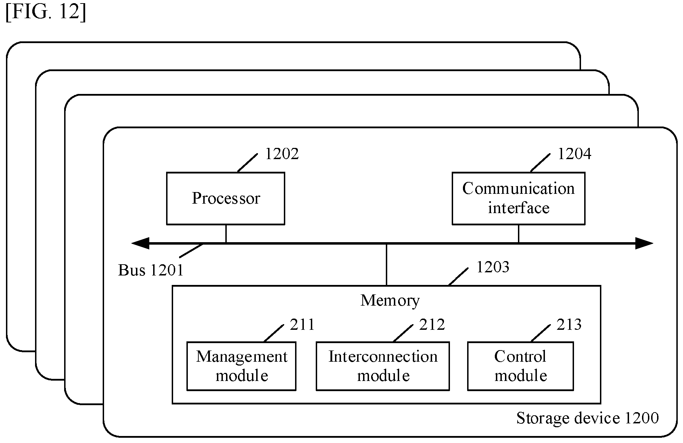

FIG. 12 is a diagram of a structure of a storage device cluster according to this application. The storage device cluster provided in this application includes at least one storage device. The storage device may be a server, for example, a central server, an edge server, or a local server in a local data center. In some embodiments, the storage device may alternatively be a terminal device, for example, a desktop computer, a notebook computer, or a smartphone.

As shown in FIG. 12, the storage device cluster includes at least one storage device 1200.

The storage device 1200 includes a bus 1201, a processor 1202, a memory 1203, and a communication interface 1204. The processor 1202, the memory 1203, and the communication interface 1204 communicate with each other through the bus 1201. It should be understood that quantities of processors and memories in the storage device 1200 are not limited in this application.

The bus 1201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 1201 may include a path for transmitting information between components (such as the memory 1203, the processor 1202, and the communication interface 1204) in the storage device 1200.

The processor 1202 may include any one or more of processors, such as a central processing unit (central processing unit, CPU), a graphics processing unit (graphics processing unit, GPU), a microprocessor (micro processor, MP), or a digital signal processor (digital signal processor, DSP).

The memory 1203 may include a volatile memory (volatile memory), for example, a random access memory (random access memory, RAM). The memory 1003 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 1203 stores executable program code. The processor 1202 executes the executable program code to respectively implement functions of the management module 211, the interconnection module 212, and the control module 213 of the storage device 21, to implement operations implemented by the first storage device, operations implemented by the second storage device, or operations implemented by the third storage device in the foregoing data circulation method. In other words, the memory 1203 stores instructions used by the first storage device, the second storage device, or the third storage device to perform the data circulation method.

The communication interface 1204 uses a transceiver module, for example, but not limited to, a network interface card or a transceiver, to implement communication between the storage device 1200 and another device or a communication network.

In some possible implementations, the memories 1203 in the one or more storage devices 1200 in the storage device cluster may store same instructions for performing the data circulation method.

In some possible implementations, the memories 1203 in the one or more storage devices 1200 in the storage device cluster may alternatively store some instructions respectively for performing the data circulation method. In other words, a combination of the one or more storage devices 1200 may jointly execute the instructions for performing the data circulation method.

It should be noted that the memories 1203 in different storage devices 1200 in the storage device cluster may store different instructions, and different instructions are separately used to perform some functions of the storage device 21. In other words, the instructions stored in the memories 1203 in different storage devices 1200 may implement functions of one or more of the management module 211, the interconnection module 212, and the control module 213.

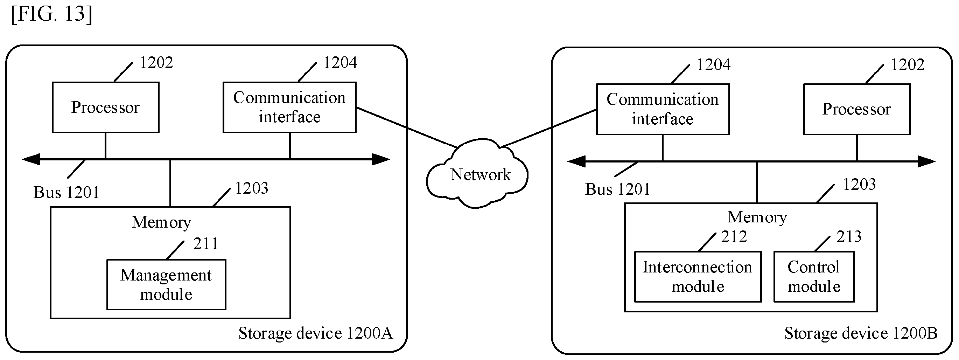

FIG. 13 is a diagram of a structure of another storage device cluster according to this application. In some possible implementations, the one or more storage devices in the storage device cluster may be connected over a network. The network may be a wide area network, a local area network, or the like. As shown in FIG. 13, two storage devices 1200A and 1200B are connected to each other through a network. Specifically, each storage device is connected to the network through a communication interface of the storage device. In this possible implementation, a memory 1203 in the storage device 1200A stores instructions for performing functions of the management module 211. In addition, the memory 1203 in the storage device 1200B stores instructions for performing functions of the interconnection module 212 and the control module 213.

A connection manner between storage device clusters shown in FIG. 13 may be that, in consideration that the data circulation method provided in this application requires storage of a large amount of data, it is considered that functions implemented by the management module 211 are executed by the storage device 1200A.

It should be understood that functions of the storage device 1200A shown in FIG. 13 may alternatively be completed by a plurality of storage devices 1200. Similarly, functions of the storage device 1200B may alternatively be completed by the plurality of storage devices 1200.

An embodiment of this application further provides another storage device cluster. For a connection relationship between storage devices in the storage device cluster, refer to the connection manners in the storage device clusters in FIG. 12 and FIG. 13. A difference lies in that memories 1203 in one or more storage devices 1200 in the storage device cluster may store same instructions for performing the data circulation method.

An embodiment of this application further provides a computer program product including instructions. The computer program product may be software or a program product that includes the instructions and that can run on a computing device or can be stored in any usable medium. When the computer program product runs on the at least one computing device, the at least one computing device is enabled to perform the foregoing data circulation method or the foregoing another data circulation method.

An embodiment of this application further provides a computer-readable storage medium. The computer-readable storage medium may be any usable medium that can be stored in a computing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the foregoing data circulation method, or instruct the computing device to perform the foregoing another data circulation method.

It should be understood that, in embodiments of this application, "in a case of", "when", and "if" both refer to that the terminal device or the access network device performs corresponding processing in an objective case, and do not limit time, and do not require the terminal device or the access network device to perform a determining action during implementation, and do not mean there is another limitation.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. A data circulation method, comprising:
generating, by a first storage device, first data;
obtaining, by the first storage device, a first transfer strategy and a first use strategy of the first data; and
sending, by the first storage device, the first data and the first use strategy to a second storage device when determining that the first data meets the first transfer strategy, wherein the first use strategy is a strategy indicating the second storage device to use the first data.

2. The method according to claim 1, wherein generating, by the first storage device, the first data comprises:
obtaining, by the first storage device, source data from a storage device, and generating the first data based on the source data, wherein the storage device belongs to a first user, the second storage device is configured to process the first data based on an indication of a requirement device of the first data, the requirement device of the first data belongs to a second user, and the storage device and the requirement device of the first data are different devices.

3. The method according to claim 1 or 2, wherein before sending, by the first storage device, the first data and the first use strategy to the second storage device when determining that the first data meets the first transfer strategy, the method further comprises:
receiving, by the first storage device, a first use request, wherein the first use request is used to request the first data; and
sending, by the first storage device, the first data and the first use strategy to the second storage device when determining that the first data meets the first transfer strategy comprises:
sending, by the first storage device, the first data and the first use strategy to the second storage device when determining that the first use request and the first data meet the first transfer strategy.

4. The method according to any one of claims 1 to 3, wherein the method further comprises:
receiving, by the first storage device, second data and a second use strategy of the second data that are sent by a third storage device; and
sending, by the first storage device, the second data and the second use strategy to a first computing device when executing the second use strategy on the second data, to control use of the second data by an application on the first computing device.

5. The method according to any one of claims 1 to 4, wherein the first transfer strategy comprises one or more of a user and access content of the first data, the first transfer strategy is generated based on a transfer requirement or asset information of the first data, the transfer requirement is determined by the first storage device and the second storage device through negotiation, the asset information is generated by the first storage device, and the asset information comprises one or more of a type, a size, a format, a purpose, and available time of the first data.

6. The method according to any one of claims 1 to 5, wherein the first use strategy comprises one or more of use time, a use range, and a use manner of the first data.

7. A data circulation method, comprising:
receiving, by a second storage device, first data and a first use strategy of the first data that are sent by a first storage device; and
sending, by the second storage device, the first data and the first use strategy to a second computing device when executing the first use strategy on the first data, to control use of the first data by an application on the second computing device.

8. The method according to claim 7, wherein the second storage device and the second computing device belong to a second connection system, and the second connection system is configured to process the first data based on an indication of a requirement device of the first data.

9. The method according to claim 7 or 8, wherein the first use strategy comprises one or more of use time, a use range, and a use manner of the first data.

10. A data circulation method, comprising:
generating, by a first computing device, first data;
obtaining, by the first computing device, a first transfer strategy and a first use strategy of the first data; and
sending, by the first computing device, the first data and the first use strategy to a second computing device when determining that the first data meets the first transfer strategy, wherein the first use strategy is a strategy indicating the second computing device to use the first data.

11. The method according to claim 10, wherein generating, by the first computing device, the first data comprises:
obtaining, by the first computing device, source data from a storage device, and generating the first data based on the source data, wherein the storage device belongs to a first user, the second computing device is configured to process the first data based on an indication of a requirement device of the first data, the requirement device of the first data belongs to a second user, and the storage device and the requirement device of the first data are different devices.

12. The method according to claim 10 or 11, wherein before sending, by the first computing device, the first data and the first use strategy to the second computing device when determining that the first data meets the first transfer strategy, the method further comprises:
receiving, by the first computing device, a first use request sent by the second computing device, wherein the first use request is used to request the first data; and
sending, by the first computing device, the first data and the first use strategy to the second computing device when determining that the first data meets the first transfer strategy comprises:
sending, by the first computing device, the first data and the first use strategy to the second computing device when determining that the first use request and the first data meet the first transfer strategy.

13. The method according to any one of claims 10 to 12, wherein the method further comprises:
receiving, by the first computing device, a first use record of the first data of the second computing device, wherein the first use record is a record of using the first data by the second computing device; and
determining, by the first computing device based on the first use record, whether use of the first data by the second computing device meets the first use strategy.

14. The method according to any one of claims 10 to 13, wherein the method further comprises:
receiving, by the first computing device, second data and a second use strategy of the second data that are sent by a third computing device; and
executing, by the first computing device, the second use strategy on the second data to control use of the second data by an application on the first computing device.

15. The method according to claim 14, wherein the first computing device is configured to process the second data based on an indication of a requirement device of the second data, and the requirement device of the second data and the storage device are different devices, or the requirement device of the second data and the storage device are a same device.

16. The method according to claim 14 or 15, wherein executing, by the first computing device, the second use strategy on the second data to control use of the second data by the application on the first computing device comprises:
executing, by the first computing device, the second use strategy on the second data in a first secure computing environment to control use of the second data by the application on the first computing device, wherein the first secure computing environment is a secure isolation environment, and is used to protect security of the first computing device, security in executing the second use strategy, and security in using the second data.

17. The method according to claim 16, wherein the method further comprises:
generating, by the first computing device, a second use record in the first secure computing environment, and uploading the second use record to the third computing device, wherein the second use record is a record of using the second data by the first computing device.

18. The method according to claim 17, wherein the first secure computing environment is implemented by disabling a data input interface and a data output interface of the application when the application on the first computing device uses the second data, or the first secure computing environment is implemented by deploying a trusted execution environment in the first computing device, or the first secure computing environment is implemented by deploying a virtual machine or a container in the first computing device.

19. The method according to any one of claims 10 to 18, wherein the first transfer strategy comprises one or more of a user and access content of the first data, the first transfer strategy is generated based on a transfer requirement or asset information of the first data, the transfer requirement is determined by the first computing device and the second computing device through negotiation, the asset information is generated by the first computing device, and the asset information comprises one or more of a type, a size, a format, a purpose, and available time of the first data.

20. The method according to any one of claims 10 to 19, wherein the first use strategy comprises one or more of use time, a use range, and a use manner of the first data.

21. A data circulation method, comprising:
receiving, by a second computing device, first data and a first use strategy of the first data that are sent by a first computing device; and
using, by the second computing device, the first data when executing the first use strategy.

22. The method according to claim 21, wherein the second computing device is configured to process the first data based on an indication of a requirement device of the first data, the first computing device is configured to process the first data based on an indication of a storage device, the first data is generated based on source data in the storage device, the storage device belongs to a first user, the requirement device belongs to a second user, and the storage device and the requirement device are different devices.

23. The method according to claim 21 or 22, wherein executing, by the second computing device, the first use strategy on the first data to control use of the first data by an application on the second computing device comprises:
executing, by the second computing device, the first use strategy on the first data in a second secure computing environment to control use of the first data by the application on the second computing device, wherein the second secure computing environment is a secure isolation environment, and is used to protect security of the second computing device, security in executing the first use strategy, and security in using the first data.

24. The method according to claim 23, wherein the method further comprises:
generating, by the second computing device, a first use record in the second secure computing environment, and uploading the first use record to the first device, wherein the first use record is a record of using the first data by the second computing device.

25. The method according to claim 23 or 24, wherein the second secure computing environment is implemented by disabling a data input interface and a data output interface of the application when the application on the second computing device uses the first data, or the second secure computing environment is implemented by deploying a trusted execution environment on the second computing device, or the second secure computing environment is implemented by deploying a virtual machine or a container on the second computing device.

26. The method according to any one of claims 21 to 25, wherein the first use strategy comprises one or more of use time, a use range, and a use manner of the first data.

27. A data circulation apparatus, used as a first storage apparatus, and comprising a first management module, a first control module, and a first interconnection module, wherein
the first management module is configured to generate first data;
the first control module is configured to obtain a first transfer strategy and a first use strategy of the first data; and
the first interconnection module is configured to send the first data and the first use strategy to a second storage apparatus when determining that the first data meets the first transfer strategy, wherein the first use strategy is a strategy indicating the second storage apparatus to use the first data.

28. A data circulation apparatus, used as a first computing apparatus, and comprising a second management module, a second control module, and a second interconnection module, wherein
the second management module is configured to generate first data;
the second control module is configured to obtain a first transfer strategy and a first use strategy of the first data; and
the second interconnection module is configured to send the first data and the first use strategy to a second computing apparatus when determining that the first data meets the first transfer strategy, wherein the first use strategy is a strategy indicating the second computing apparatus to use the first data.

29. A data circulation apparatus, used as a second storage apparatus, and comprising a third interconnection module and a third control module, wherein
the third interconnection module is configured to receive first data and a first use strategy of the first data that are sent by a first storage apparatus; and
the third control module is configured to send the first data and the first use strategy to a second computing apparatus when executing the first use strategy on the first data, to control use of the first data by an application on the second computing apparatus.

30. A data circulation apparatus, used as a second computing apparatus, and comprising a fourth interconnection module and a fourth control module, wherein
the fourth interconnection module is configured to receive first data and a first use strategy of the first data that are sent by a first computing apparatus; and
the fourth control module is configured to use the first data when executing the first use strategy.

31. A data circulation system, comprising the first storage apparatus according to claim 27 and/or the second storage apparatus according to claim 29.

32. A data circulation system, comprising the first computing apparatus according to claim 28 and/or the second computing apparatus according to claim 30.

33. A storage device cluster, comprising at least one storage device, wherein each storage device comprises a processor and a memory; and
the processor of the at least one storage device is configured to execute instructions stored in the memory of the at least one storage device, so that the storage device cluster performs the method according to any one of claims 1 to 6, or performs the method according to any one of claims 7 to 9.

34. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 10 to 20, or performs the method according to any one of claims 21 to 26.

35. A computer program product comprising instructions, wherein when the instructions are run by a computing device cluster, the computing device cluster is enabled to perform the method according to any one of claims 1 to 26.

36. A computer-readable storage medium, comprising computer program instructions, wherein when the computer program instructions are executed by a computing device cluster, the computing device cluster performs the method according to any one of claims 1 to 26.
